# EUROPEAN PATENT APPLICATION

(11) **EP 4 485 838 A1**
(43) Date of publication of application: **01.01.2025**
(21) Application number: 23765772.1
(22) Date of filing: 20.02.2023
(51) Int. Cl.: H04L 7/00

(54) **DATA PROCESSING METHOD AND SECOND COMMUNICATION DEVICE**

(30) Priority: 08.03.2022 CN 202210220031
(71) Applicant: Huawei Technologies Co., Ltd., Shenzhen, Guangdong 518129 (CN)
(72) Inventor: YAN, Zengchao, Shenzhen, Guangdong 518129 (CN); MA, Huixiao, Shenzhen, Guangdong 518129 (CN); LEUNG, Wai Kong Raymond, Shenzhen, Guangdong 518129 (CN); HUANG, Qinhui, Shenzhen, Guangdong 518129 (CN); YANG, Xiaoling, Shenzhen, Guangdong 518129 (CN)
(74) Representative: Huawei European IPR
(86) International application number: PCT/CN2023/077173
(87) International publication number: WO 2023/169194

(57) **Abstract**

This application provides a data processing method and a second communication apparatus, to resolve a problem of relatively long data synchronization time in a conventional technology, and may be applied to augmented reality AR, virtual reality VR, artificial intelligence AI, cloud applications, or other fields. The data processing method includes: A second optical module receives first data from a first optical module, and determines out-of-synchronization lock based on the first data. The second optical module sends, to a second host, first indication information indicating that the second optical module is in out-of-synchronization lock state. The second optical module receives second data from the first optical module, determines synchronization lock based on the second data, and sends, to the second host, second indication information indicating that the second optical module is in synchronization lock state. The second optical module indicates synchronization statuses of the second optical module to the second host by using the first indication information and the second indication information, so that the second host can quickly start (or enter) a synchronization process without waiting for long time, to help reduce data synchronization duration.

## Description

### CROSS-REFERENCE TO RELATED APPLICATIONS

This application claims priority to Chinese Patent Application No. 202210220031.2, filed with the China National Intellectual Property Administration on March 8, 2022 and entitled "DATA PROCESSING METHOD AND SECOND COMMUNICATION APPARATUS", which is incorporated herein by reference in its entirety.

### TECHNICAL FIELD

This application relates to the field of data processing technologies, and in particular, to a data processing method and a second communication apparatus.

### BACKGROUND

As data traffic continues to grow rapidly, a capacity of a communication device is also rapidly increasing, thereby placing higher requirements on an Ethernet transmission rate. The International Organization for Standardization defines the institute of electrical and electronics engineers (institute of electrical and electronics engineers, IEEE) 802.3 Ethernet (Ethernet) protocol. The IEEE 802.3 Ethernet protocol defines 100 gigabit Ethernet (GE), 200GE, and 400GE interface protocols. However, a 400GE network port technology is also incapable of satisfying the requirements, and a next-generation Ethernet technology with a throughput rate of more than 400 gigabits per second (Gbits per second, Gbps) (for example, 800 Gbps or 1.6 Tbps) is urgently needed.

However, an increase in the Ethernet transmission rate increases a bit error rate of transmission, and data synchronization and alignment needs to be first performed in a data transmission process. Currently, a 400GE synchronization and alignment mechanism is mainly implemented by capturing an alignment marker (alignment marker, AM) subsequence. The AM subsequence may be usually found once every 163840×257 bits. That the data is synchronized is determined when it is found that AM subsequences may be correctly matched two consecutive times. That the data is not synchronized is determined when it is found that AM subsequences cannot be correctly matched five consecutive times. A large interval between the AM subsequences results in long data synchronization, which increases a data transmission delay.

In conclusion, how to reduce data synchronization duration is a technical problem to be urgently resolved currently.

### SUMMARY

This application provides a data processing method and a second communication apparatus, to reduce data synchronization duration.

According to a first aspect, this application provides a data processing method. The method includes: A second communication apparatus receives first data from a first communication apparatus, and determines out-of-synchronization lock (which is also referred to as being non-synchronized, being unaligned, being non-synchronized and unaligned, or the like) based on the first data; and sends first indication information to a fourth communication apparatus, where the first indication information indicates that the second communication apparatus is in out-of-synchronization lock state. The second communication apparatus receives second data from the first communication apparatus, determines synchronization lock (which is also referred to as being synchronized, being aligned, being synchronized and aligned, or the like) based on the second data, and sends second indication information to the fourth communication apparatus, where the second indication information indicates that the second communication apparatus is in synchronization lock state.

Based on the foregoing solution, after determining out-of-synchronization lock, the second communication apparatus sends, to the fourth communication apparatus, the first indication information indicating that the second communication apparatus is in out-of-synchronization lock state, so that the fourth communication apparatus can determine that the first data is invalid data, to help reduce computation overheads of the fourth communication apparatus. Further, after determining synchronization lock, the second communication apparatus sends, to the fourth communication apparatus, the second indication information indicating that the second communication apparatus is in synchronization lock state, so that the fourth communication apparatus can quickly start (or enter) a synchronization process without waiting for long time, to help reduce data synchronization duration.

In a possible implementation, the second communication apparatus includes a second optical module, the first communication apparatus includes a first optical module, and the fourth communication apparatus includes a second host.

For ease of description of the solutions, in the following descriptions, an example in which the second communication apparatus is the second optical module, the first communication apparatus is the first optical module, a third communication apparatus is a first host, and the fourth communication apparatus is the second host is used. In other words, in the following descriptions, the first optical module may be used instead of the first communication apparatus, the second optical module may be used instead of the second communication apparatus, the first host may be used instead of the third communication apparatus, and the second host may be used instead of the fourth communication apparatus.

In a possible implementation, the second optical module sends third data to the second host, where the third data is obtained by replacing a part of data in the second data with a first preset sequence, and the first preset sequence is for synchronization of the second host.

Replacing the part data in the second data with the first preset sequence helps save bandwidth between the second optical module and the second host. In addition, the second host may perform synchronization based on the first preset sequence in the third data without waiting for long time for the first host to determine, by using an AM subsequence inserted into the second data at a large interval, whether synchronization is performed, to help further reduce the data synchronization duration.

In a possible implementation, the first preset sequence is at least one subsequence in an AM group, and may be referred to as an AM subsequence.

In a possible implementation, the second optical module may send the second indication information to the second host through an indication signal path of an attachment unit interface (attachment unit interface, AUI). Alternatively, the second optical module may send the second indication information to the second host through a management data input/output (management data input/output, MDIO) interface. The indication signal path may be, for example, inst:IS_SIGNAL.indication, where inst represents an instance. For example, if inst is an FEC sublayer, the indication signal path may be represented as FEC:IS_SIGNAL.indication. inst:IS_SIGNAL.indication is generated through a group of signal indication logic (signal indication logic, SIL) and is for reporting validity of a signal received from a lower-layer processing unit. A plurality of types of detection indication signals generated by the second optical module are converged into the path inst:IS_SIGNAL.indication through the signal indication logic SIL, and are sent to the second host.

The second optical module may send the second indication information to the second host in real time at a high speed through the indication signal path of the AUI; and may send, without changing an existing data stream processing procedure, the second indication information to the second host through the MDIO interface.

In a possible implementation, the second optical module may send the third data to the second host through a first data stream path of the AUI. The first data stream path may be, for example, inst:IS_UNITDATA.indication.

In a possible implementation, the second optical module may send the first indication information to the second host through the indication signal path of the AUI.

In a possible implementation, the second optical module may send the first data to the second host through the first data stream path of the AUI.

The following shows three possible manners of replacing the part of data in the second data with the first preset sequence as examples.

Manner A: Replace a complete second codeword with the first preset sequence.

In a possible implementation, the second data includes N second codewords, and N is an integer greater than 1; and the second optical module replaces w second codewords in the N second codewords with the first preset sequence, to obtain the third data, where w is a positive integer less than or equal to N. Further, w is a positive integer greater than 1 and less than or equal to N.

Further, a length of the first preset sequence is equal to a positive integer multiple of a code length of one second codeword.

The complete second codeword is replaced with the first preset sequence, so that the second host can quickly determine a boundary of each second codeword in the received second data. In this way, duration needed for synchronization can be reduced, and complexity of synchronization computation on a second host side can be reduced.

Manner B: Replace a second overhead block in a second codeword with the first preset sequence.

In a possible implementation, the second data includes N second codewords, the second codeword includes a second information block and a second overhead block, and N is an integer greater than 1; and the second optical module replaces second overhead blocks in w second codewords in the N second codewords with the first preset sequence, to obtain the third data.

Further, a length of the first preset sequence is less than or equal to a length of one second overhead block.

The second overhead block in the second codeword is replaced with the first preset sequence, so that normal transmission of valid data cannot be affected. Further, when the length of the first preset sequence is equal to the length of the second overhead block, the second host can quickly determine a boundary of the second codeword in the received second data, to reduce duration needed for synchronization.

Manner C: Replace a second information block in a second codeword with the first preset sequence.

In a possible implementation, the second data includes N second codewords, the second codeword includes a second information block and a second overhead block, and N is an integer greater than 1; and the second optical module replaces first information blocks in w second codewords in the N second codewords with the first preset sequence, to obtain the third data.

Further, a length of the first preset sequence is less than or equal to a length of one second information block.

When the second overhead block needs to be discarded on a second optical module side, the second information block is replaced with the first preset sequence, so that the second host performs synchronization based on the first preset sequence, and this helps reduce duration needed for synchronization of the second host.

In a possible implementation, the w second codewords are w consecutive or inconsecutive second codewords in the N second codewords. Intervals between the w inconsecutive second codewords may be the same or different. For example, a second codeword may be replaced with the first preset sequence every 2×j×5440/PCSL/L bits, where L represents the length of the second information block in the second codeword, PCSL represents a quantity of physical coding sublayer lanes, and a value of j may be a positive integer such as 1, 2, 3, or 4.

The w consecutive first preset sequences can enable the second host to quickly detect the w first preset sequences, so that the duration needed for synchronization can be further shortened. The w inconsecutive second codewords can avoid a case in which the second host cannot detect the first preset sequence because a part of data is lost in a transmission process. Further, when w is greater than 2, a case in which the second host cannot accurately determine a synchronization status because a part of data in the second data is lost in a transmission process can be avoided. This helps improve accuracy of the synchronization of the second host.

In a possible implementation, the second data may include a second preset sequence; and the second optical module may replace a second codeword with the first preset sequence from a boundary position of any second codeword in N second codewords, and stop the replacement when it is detected that the second preset sequence matches a second known preset sequence of the second optical module at least once, to obtain the third data.

When the second data includes the second preset sequence, the second optical module may stop the replacement when it is detected that the second preset sequence matches the second known preset sequence of the second optical module at least once, to help the second optical module reduce a quantity of replaced second codewords.

In a possible implementation, the second preset sequence is at least one subsequence in the AM group.

The second preset sequence is set to the at least one subsequence in the AM group, and is compatible with an existing AM synchronization mechanism.

The following shows two possible implementations of performing synchronization based on the second data as examples.

### Implementation A

In a possible implementation, the second data includes the N second codewords, and N is an integer greater than 1. The second optical module decodes the second data based on a sliding window with a preset quantity of bit; after determining that the decoding succeeds at least once, performs decoding based on a sliding window with the code length of the second codeword, and collects statistics on a quantity of decoding successes in second decoding results; and if the quantity of decoding successes in the second decoding results is greater than a third threshold, determines synchronization lock, where the preset quantity of bits is less than the code length of the second codeword.

The second optical module needs to track a synchronization status of received data in real time, and the foregoing implementation A is compatible with the existing synchronization mechanism. This simplifies processing of the received data by the second optical module

### Implementation B

In a possible implementation, the second data includes the N second codewords, the second codeword includes the second information block and the second overhead block, and the second overhead block includes a third preset sequence; and if the second optical module detects, within a preset time window, that a quantity of third preset sequences is greater than a fifth threshold, the second optical module determines synchronization lock.

Synchronization lock is determined by detecting the quantity of third preset sequences within the preset time window, and decoding is not needed. The implementation is simple. In addition, the third preset sequence occupies a part of bits in a first overhead block. Therefore, an amount of transmitted data does not increase.

The following shows two possible implementations of determining a synchronization status of the second optical module based on the first data as examples.

Implementation 1: The synchronization status is determined based on a decoding result.

In a possible implementation, the second optical module decodes the first data, to obtain M first decoding results, where the first decoding result includes a decoding success or a decoding failure, and M is an integer greater than 1; and if a quantity of decoding failures in the M first decoding results is greater than a first threshold, the second optical module determines out-of-synchronization lock; or if a quantity of decoding successes in the M first decoding results is greater than a second threshold, the second optical module determines synchronization lock.

Implementation 2: Synchronization is determined based on the third preset sequence included in a first overhead block in a first codeword.

In a possible implementation, the first data includes Q first codewords, the first codewords include a first information block and a first overhead block, the first overhead block includes a third preset sequence, and Q is an integer greater than 1; and if the second optical module detects, within a preset time window, that a quantity of third preset sequences is less than a fifth threshold, the second optical module determines out-of-synchronization lock; or if the second optical module detects, within a preset time window, that a quantity of third preset sequences is greater than or equal to a fifth threshold, the second optical module determines synchronization lock.

In a possible implementation, the second optical module receives third indication information from the second host through the MDIO interface, where the third indication information indicates that the second host is in out-of-synchronization lock state.

In a possible implementation, the second optical module includes a second physical medium attachment (physical medium attachment, PMA) sublayer, or includes the second PMA sublayer and a second forward error correction (forward error correction, FEC) sublayer; and the second host includes a second physical coding sublayer (physical coding sublayer, PCS), or includes the second PCS and a fourth FEC sublayer.

According to a second aspect, this application provides a data processing method. The method includes: A second host receives first indication information from a second optical module, where the first indication information indicates that the second optical module is in out-of-synchronization lock state. The second host determines out-of-synchronization lock based on the first indication information. The second host receives second indication information from the second optical module, where the second indication information indicates that the second optical module is in synchronization lock state. The second host starts synchronization based on the second indication information.

Based on the foregoing solution, after receiving the first indication information indicating that the second optical module is in out-of-synchronization lock state, the second host may determine that received first data is invalid data, and may determine that the second host is in out-of-synchronization lock state. Further, after receiving the second indication information indicating that the second optical module is in synchronization lock state, the second host may quickly start (or enter) the synchronization without waiting for long time, to help reduce data synchronization duration.

In a possible implementation, the second host may receive the first indication information from the second optical module through an MDIO interface; or the second host may receive the first indication information from the second optical module through an indication signal path of an AUI.

In a possible implementation, the second host may receive the second indication information from the second optical module through the MDIO interface; or the second host may receive the second indication information from the second optical module through the indication signal path of the AUI.

In a possible implementation, the method further includes: The second host receives third data from the second optical module, where the third data is obtained by replacing a part of data in second data with a first preset sequence, the third data includes a second preset sequence, and the second data is received by the second optical module from a first optical module. If the second host detects that the first preset sequence matches a first known preset sequence of the second host at least once, and detects that the second preset sequence matches a fourth known preset sequence of the second host at least once, it indicates AM lock. Further, for each physical coding sublayer lane, the second host determines that a quantity of second preset sequences is 1, which indicates that a condition for lane reorder is satisfied. Further, the second host reorders m physical coding sublayer lanes, where m is an integer greater than 1.

The second host detects that the first preset sequence matches the first known preset sequence of the second host at least once, and detects that the second preset sequence matches the fourth known preset sequence of the second host at least once. There is no need to wait for long time for a first host to determine, by using an AM subsequence inserted into the second data at a large interval, whether synchronization is performed, so that duration needed for synchronization of the second host can be reduced.

According to a third aspect, this application provides a data processing method. The method includes: A first optical module receives fourth data from a first host, where the fourth data includes k second preset sequences, and k is an integer greater than 1. The first optical module determines out-of-synchronization lock based on the fourth data, and sends the fourth data to the first host.

Based on the foregoing solution, the first host receives the fourth data from the first optical module, may determine that the first optical module is in out-of-synchronization lock state, and enters a loopback mode (loopback mode). This helps avoid a case in which a second optical module cannot accurately identify received data because the first optical module transmits out-of-synchronization lock data to the second optical module. In addition, this helps avoid a case in which the first optical module exceeds a limit of an allocated processing delay.

Further, the first optical module may receive fifth data from the first host, where the fifth data includes h second preset sequences, and h is greater than k.

The fifth data is obtained by inserting the second preset sequences more densely, for the first optical module to quickly implement synchronization lock.

In a possible implementation, the first optical module may receive fourth indication information from the first host through an MDIO interface, where the fourth indication information indicates that the first host is in out-of-synchronization lock state.

The first host sends the fourth indication information to the first optical module, so that the first optical module can quickly enter the loopback mode.

According to a fourth aspect, this application provides a data processing method. The method includes: A second optical module receives sixth data from a first optical module, determines out-of-synchronization lock based on the sixth data, and replaces a part of data in seventh data with fourth preset sequences, to obtain eighth data, where the seventh data is received by the second optical module from a second host. The second optical module sends the eighth data to the first optical module, and receives ninth data from the first optical module, where the ninth data is obtained by replacing tenth data with the fourth preset sequences by the first optical module, and the tenth data is received by the first optical module from a first host. The second optical module detects the fourth preset sequences in the ninth data at least twice, and replaces the fourth preset sequences in the eighth data with fifth preset sequences, to obtain eleventh data, where the fifth preset sequence is different from the fourth preset sequence. The second optical module sends the eleventh data to the first optical module, and receives twelfth data from the first optical module, where the twelfth data is obtained by replacing the fourth preset sequences in the ninth data with the fifth preset sequences when the first optical module detects the at least two fourth preset sequences in the eighth data. The second optical module detects the at least two fifth preset sequences, and determines synchronization lock.

Based on the foregoing solution, synchronization of the first optical module and the second optical module may be independent of processing procedures of the first host and the second host. Therefore, an existing host synchronization procedure does not need to be changed.

The following shows three possible manners of replacing the part of data in the seventh data with the fourth preset sequences as examples.

In a possible implementation, the seventh data includes P third codewords, the third codeword includes a third information block and a third overhead block, and P is an integer greater than 1.

Manner 1: Replace complete third codewords with the fourth preset sequences.

In a possible implementation, the second optical module replaces z third codewords in the P third codewords with the fourth preset sequences, to obtain the eighth data, where z is a positive integer greater than 1 and less than or equal to P.

Further, a length of the fourth preset sequence is equal to a positive integer multiple of a code length of one third codeword.

The complete third codewords are replaced with the fourth preset sequences, so that the first optical module can quickly determine a boundary of each third codeword in the received eighth data. In this way, duration needed for synchronization can be reduced, and complexity of synchronization computation on a first optical module side can be reduced.

Manner 2: Replace the third overhead block in the third codeword with the fourth preset sequences.

In a possible implementation, the second optical module replaces third overhead blocks in z third codewords in the P third codewords with the fourth preset sequences, to obtain the eighth data.

Further, a length of the fourth preset sequence is less than or equal to a length of one third overhead block.

The third overhead block in the third second codeword is replaced with the fourth preset sequences, so that normal transmission of valid data cannot be affected. Further, when the length of the fourth preset sequence is equal to the length of the third overhead block, the first optical module can quickly determine a boundary of the third codeword in the received eighth data, to reduce duration needed for synchronization.

Manner 3: Replace the third information block in the third codeword with the fourth preset sequences.

In a possible implementation, the second optical module replaces third information blocks in z third codewords in the P third codewords with the fourth preset sequences, to obtain the eighth data.

Further, a length of the fourth preset sequence is less than or equal to a length of one third information block.

When a second overhead block needs to be discarded on a second optical module side, the third information block is replaced with the fourth preset sequences, so that the first optical module performs synchronization based on the fourth preset sequences, and this helps reduce duration needed for synchronization of the first optical module.

In a possible implementation, the z third codewords are z consecutive or inconsecutive third codewords in the P third codewords. Intervals between the z inconsecutive third codewords may be the same. For example, one third codeword may be replaced with a first preset sequence every 2×j×5440/PCSL/L bits, where L represents the length of the third information block in the third codeword, PCSL represents a quantity of physical coding sublayer lanes, and a value of j may be a positive integer such as 1, 2, 3, or 4. Alternatively, intervals between the z inconsecutive third codewords may be different. This is not limited in this application.

In a possible implementation, after the second optical module detects the at least two fifth preset sequences, and determines synchronization lock, the second optical module may send second indication information to the second host through an indication signal path of an AUI or through an MDIO interface, and send thirteenth data to the second host through a first data stream path of the AUI.

In a possible implementation, after the second optical module determines out-of-synchronization lock based on the sixth data, the second optical module may send first indication information to the second host through the indication signal path of the AUI or through the MDIO interface, and send the sixth data to the second host through the first data stream path of the AUI.

In a possible implementation, the second optical module includes a second PMA sublayer, or includes the second PMA sublayer and a second FEC sublayer; the second host includes a second PCS, or includes the second PCS and a fourth FEC sublayer; the first optical module includes a first PMA sublayer, or includes the first PMA sublayer and a first FEC sublayer; and the first host includes a first PCS, or includes the first PCS and the first FEC sublayer.

According to a fifth aspect, this application provides a data processing method. The method includes: A second layer receives first data from a first layer, where the second layer includes a second PMA sublayer, or includes the second PMA sublayer and a second FEC sublayer; and the first layer includes a first PMA sublayer, or includes the first PMA sublayer and a first FEC sublayer. The second layer determines out-of-synchronization lock (which is also referred to as being non-synchronized, being unaligned, being non-synchronized and unaligned, or the like) based on the first data. The second layer sends first indication information to a fourth layer, where the fourth layer includes a second PCS, or includes the second PCS and the second FEC sublayer, and the first indication information indicates that a second optical module is in out-of-synchronization lock state. The second layer receives second data from the first layer, determines synchronization lock (which is also referred to as being synchronized, being aligned, being synchronized and aligned, or the like) based on the second data, and sends second indication information to the fourth layer, where the second indication information indicates that the second optical module is in synchronization lock state.

Based on the foregoing solution, after determining out-of-synchronization lock, the second layer sends, to the fourth layer, the first indication information indicating that the second layer is in out-of-synchronization lock state, so that the fourth layer can determine that the first data is invalid data, to help avoid an operation error of the fourth layer. Further, after determining synchronization lock, the second layer sends, to the fourth layer, the second indication information indicating that the second layer is in synchronization lock state, so that the fourth layer can quickly start (or enter) a synchronization process without waiting for long time, to help reduce data synchronization duration.

In a possible implementation, the second layer sends third data to the fourth layer, where the third data is obtained by replacing a part of data in the second data with a first preset sequence, and the first preset sequence is for synchronization of the fourth layer.

In a possible implementation, the first preset sequence is at least one subsequence in an AM group.

In a possible implementation, the second layer may send the second indication information to the fourth layer through an indication signal path of an AUI. Alternatively, the second layer may send the second indication information to the fourth layer through an MDIO interface.

In a possible implementation, the second layer may send the third data to the fourth layer through a first data stream path of the AUI.

In a possible implementation, the second layer may send the first indication information to the fourth layer through the indication signal path of the AUI.

In a possible implementation, the second layer may send the first data to the fourth layer through the first data stream path of the AUI.

The following shows three possible manners of replacing the part of data in the second data with the first preset sequence as examples.

Manner A: Replace a complete second codeword with the first preset sequence.

In a possible implementation, the second data includes N second codewords, and N is an integer greater than 1; and the second layer replaces w second codewords in the N second codewords with the first preset sequence, to obtain the third data, where w is a positive integer less than or equal to N. Further, w is a positive integer greater than 1 and less than or equal to N.

Further, a length of the first preset sequence is equal to a positive integer multiple of a code length of one second codeword.

Manner B: Replace a second overhead block in a second codeword with the first preset sequence.

In a possible implementation, the second data includes N second codewords, the second codeword includes a second information block and a second overhead block, and N is an integer greater than 1; and the second layer replaces first information blocks in w second codewords in the N second codewords with the first preset sequence, to obtain the third data.

Further, a length of the first preset sequence is less than or equal to a length of one second information block.

Manner C: Replace a second information block in a second codeword with the first preset sequence.

In a possible implementation, the second data includes N second codewords, the second codeword includes a second information block and a second overhead block, and N is an integer greater than 1; and the second layer replaces second overhead blocks in w second codewords in the N second codewords with the first preset sequence, to obtain the third data.

Further, a length of the first preset sequence is less than or equal to a length of one second overhead block.

In a possible implementation, the w second codewords are w consecutive or inconsecutive second codewords in the N second codewords. Intervals between the w inconsecutive second codewords may be the same or different. For example, a second codeword may be replaced with the first preset sequence every 2×j×5440/PCSL/L bits, where L represents the length of the second information block in the second codeword, PCSL represents a quantity of physical coding sublayer lanes, and a value of j may be a positive integer such as 1, 2, 3, or 4.

In a possible implementation, the second data includes a second preset sequence; and the second layer may replace a second codeword with the first preset sequence from a boundary position of any second codeword in N second codewords, and stop the replacement when it is detected that the second preset sequence matches a second known preset sequence of the second layer at least once, to obtain the third data.

In a possible implementation, the second preset sequence is at least one subsequence in the alignment marker AM group.

The following shows two possible implementations of performing synchronization based on the second data as examples.

### Implementation A

In a possible implementation, the second data includes the N second codewords, and N is an integer greater than 1; and the second layer decodes the second data based on a sliding window with a preset quantity of bit; after determining that the decoding succeeds at least once, performs decoding based on a sliding window with the code length of the second codeword, and collects statistics on a quantity of decoding successes in second decoding results; and if the quantity of decoding successes in the second decoding results is greater than a third threshold, determines synchronization lock, where the preset quantity of bits is less than the code length of the second codeword.

### Implementation B

In a possible implementation, the second data includes the N second codewords, the second codeword includes the second information block and the second overhead block, and the second overhead block includes a third preset sequence; and if the second layer detects, within a preset time window, that a quantity of third preset sequences is greater than a fifth threshold, the second layer determines synchronization lock.

The following shows two possible implementations of determining synchronization of the second layer based on the first data as examples.

Implementation 1: The synchronization is determined based on a decoding result.

In a possible implementation, the second layer decodes the first data, to obtain M first decoding results, where the first decoding result includes a decoding success or a decoding failure, and M is an integer greater than 1; and if a quantity of decoding failures in the M first decoding results is greater than a first threshold, the second layer determines out-of-synchronization lock; or if a quantity of decoding successes in the M first decoding results is greater than a second threshold, the second layer determines synchronization lock.

Implementation 2: The synchronization is determined based on the third preset sequence included in a first overhead block in a first codeword.

In a possible implementation, the first data includes Q first codewords, the first codewords include a first information block and a first overhead block, the first overhead block includes a third preset sequence, and Q is an integer greater than 1; and if the second layer detects, within a preset time window, that a quantity of third preset sequences is less than a fifth threshold, the second layer determines out-of-synchronization lock; or if the second layer detects, within a preset time window, that a quantity of third preset sequences is greater than or equal to a fifth threshold, the second layer determines synchronization lock.

In a possible implementation, the second layer receives third indication information from the fourth layer through the MDIO interface, where the third indication information indicates that the fourth layer is in out-of-synchronization lock state.

For technical effects that can be achieved by any aspect in the fifth aspect, refer to the descriptions of the beneficial effects in the first aspect. Details are not described herein again.

According to a sixth aspect, this application provides a data processing method. The method includes: A fourth layer receives first indication information from a second layer, where the first indication information indicates that the second layer is in out-of-synchronization lock state. The fourth layer determines out-of-synchronization lock based on the first indication information. The fourth layer receives second indication information from the second layer, where the second indication information indicates that the second layer is in synchronization lock state. The fourth layer starts synchronization based on the second indication information. The second layer includes a second PMA sublayer, or includes the second PMA sublayer and a second FEC sublayer; and the fourth layer includes a second PCS, or includes the second PCS and the second FEC sublayer.

Based on the foregoing solution, after receiving the first indication information indicating that the second layer is in out-of-synchronization lock state, the fourth layer may determine that received first data is invalid data, to help avoid an operation error of the fourth layer; and may determine that the fourth layer is in out-of-synchronization lock state. Further, after receiving the second indication information indicating that the second layer is in synchronization lock state, the fourth layer may quickly start (or enter) a synchronization process without waiting for long time, to help reduce data synchronization duration.

In a possible implementation, the fourth layer may receive the first indication information from the second layer through an MDIO interface; or the fourth layer may receive the first indication information from the second layer through an indication signal path of an AUI.

In a possible implementation, the fourth layer may receive the second indication information from the second layer through the MDIO interface; or the fourth layer may receive the second indication information from the second layer through the indication signal path of the AUI.

In a possible implementation, the method further includes: The fourth layer receives third data from the second layer, where the third data is obtained by replacing a part of data in second data with a first preset sequence, the second data is received by the second layer from a first layer, and the third data further includes a second preset sequence. The fourth layer detects that the first preset sequence matches a first known preset sequence of the fourth layer at least once, detects that the second preset sequence matches a fourth known preset sequence of the fourth layer at least once, further determines that a quantity of second preset sequences is 1, and reorders m physical coding sublayer lanes, where m is an integer greater than 1.

For technical effects that can be achieved by any aspect in the sixth aspect, refer to the descriptions of the beneficial effects in the second aspect. Details are not described herein again.

According to a seventh aspect, this application provides a data processing method. The method includes: A first layer receives fourth data from a third layer, where the fourth data includes k second preset sequences, and k is an integer greater than 1. The first layer determines out-of-synchronization lock based on the fourth data, and sends the fourth data to the third layer. The first layer includes a first PMA sublayer, or includes the first PMA sublayer and a first FEC sublayer; and the third layer includes a first PCS, or includes the first PCS and the first FEC sublayer.

In a possible implementation, the first layer may further receive fifth data from the third layer, where the fifth data includes h second preset sequences, and h is greater than k.

In a possible implementation, the first layer may receive fourth indication information from the third layer through an MDIO interface, where the fourth indication information indicates that the third layer is in out-of-synchronization lock state.

For technical effects that can be achieved by any aspect in the seventh aspect, refer to the descriptions of the beneficial effects in the third aspect. Details are not described herein again.

According to an eighth aspect, this application provides a data processing method. The method includes: A second layer receives sixth data from a first layer, determines out-of-synchronization lock based on the sixth data, and replaces a part of data in seventh data with fourth preset sequences, to obtain eighth data, where the seventh data is received by the second layer from a fourth layer. The second layer sends the eighth data to the first layer, and receives ninth data from the first layer, where the ninth data is obtained by replacing tenth data with the fourth preset sequences by the first layer, and the tenth data is received by the first layer from a third layer. The second layer detects the fourth preset sequences in the ninth data at least twice, and replaces the fourth preset sequences in the eighth data with fifth preset sequences, to obtain eleventh data, where the fifth preset sequence is different from the fourth preset sequence. The second layer sends the eleventh data to the first layer, and receives twelfth data from the first layer, where the twelfth data is obtained by replacing the fourth preset sequences in the ninth data with the fifth preset sequences when the first layer detects the at least two fourth preset sequences in the eighth data. The second layer detects the at least two fifth preset sequences, and determines synchronization lock. The first layer includes a first PMA sublayer, or includes the first PMA sublayer and a first FEC sublayer; the second layer includes a second PMA sublayer, or includes the second PMA sublayer and a second FEC sublayer; the third layer includes a first PCS, or includes the first PCS and the first FEC sublayer; and the fourth layer includes a second PCS, or includes the second PCS and the second FEC sublayer.

The following shows three possible manners of replacing the part of data in the seventh data with the fourth preset sequences as examples.

In a possible implementation, the seventh data includes P third codewords, the third codeword includes a third information block and a third overhead block, and P is an integer greater than 1.

Manner 1: Replace complete third codewords with the fourth preset sequences.

In a possible implementation, the second layer replaces z third codewords in the P third codewords with the fourth preset sequences, to obtain the eighth data, where z is a positive integer less than or equal to P.

Further, a length of the fourth preset sequence is equal to a positive integer multiple of a code length of one third codeword.

Manner 2: Replace the third overhead block in the third codeword with the fourth preset sequences.

In a possible implementation, the second layer replaces third information blocks in z third codewords in the P third codewords with the fourth preset sequences, to obtain the eighth data.

Further, a length of the fourth preset sequence is less than or equal to a length of one third information block.

Manner 3: Replace the third information block in the third codeword with the fourth preset sequences.

In a possible implementation, the second layer replaces third overhead blocks in z third codewords in the P third codewords with the fourth preset sequences, to obtain the eighth data.

Further, a length of the fourth preset sequence is less than or equal to a length of one third overhead block.

In a possible implementation, the z third codewords are z consecutive or inconsecutive third codewords in the P third codewords. Intervals between the z inconsecutive third codewords may be the same. For example, one third codeword may be replaced with a first preset sequence every 2×j×5440/PCSL/L bits, where L represents the length of the third information block in the third codeword, PCSL represents a quantity of physical coding sublayer lanes, and a value of j may be a positive integer such as 1, 2, 3, or 4. Alternatively, intervals between the z inconsecutive third codewords may be different. This is not limited in this application.

In a possible implementation, after the second layer detects the at least two fifth preset sequences, and determines synchronization lock, the second layer may send second indication information to the fourth layer through an indication signal path of an AUI or through an MDIO interface, and send thirteenth data to the fourth layer through a first data stream path of the AUI.

In a possible implementation, after the second layer determines out-of-synchronization lock based on the sixth data, the second layer may send first indication information to the fourth layer through the indication signal path of the AUI or through the MDIO interface, and send the sixth data to the fourth layer through the first data stream path of the AUI.

In a possible implementation, the second layer includes a second PMA sublayer, or includes the second PMA sublayer and a second FEC sublayer; the fourth layer includes a second PCS, or includes the second PCS and a fourth FEC sublayer; the first layer includes a first PMA sublayer, or includes the first PMA sublayer and a first FEC sublayer; and the third layer includes a first PCS, or includes the first PCS and the first FEC sublayer.

For technical effects that can be achieved by any aspect in the eighth aspect, refer to the descriptions of the beneficial effects in the fourth aspect. Details are not described herein again.

According to a ninth aspect, this application provides a communication apparatus. The communication apparatus is configured to implement the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, the method according to any one of the fifth aspect or the possible implementations of the fifth aspect, the method according to any one of the sixth aspect or the possible implementations of the sixth aspect, the method according to any one of the seventh aspect or the possible implementations of the seventh aspect, or the method according to any one of the eighth aspect or the possible implementations of the eighth aspect, and includes corresponding function modules separately configured to implement steps in the foregoing methods. The function may be implemented by using hardware, or may be implemented by hardware executing corresponding software. The hardware or software includes one or more modules corresponding to the foregoing functions.

In a possible implementation, the communication apparatus may be a second optical module. For beneficial effects, refer to the descriptions of the first aspect. Details are not described herein. The communication apparatus may include an interface circuit and a processor. The processor is configured to implement corresponding functions in the first aspect through a logic circuit or by executing code instructions. The interface circuit is configured to: receive a signal from a communication apparatus other than the communication apparatus, and transmit the signal to the processor; or send a signal from the processor to a communication apparatus other than the communication apparatus. The interface circuit may be an interface circuit integrating receiving and sending functions. Optionally, the communication apparatus may further include a memory. The memory may be coupled to the processor, and the memory stores program instructions and data that are necessary for the communication apparatus.

The interface circuit is configured to receive first data from a first optical module. The processor is configured to determine out-of-synchronization lock based on the first data. The interface circuit is further configured to: send first indication information to a second host, and receive second data from the first optical module, where the first indication information indicates that the second optical module is in out-of-synchronization lock state. The processor is further configured to: determine synchronization lock based on the second data, and send second indication information to the second host through the interface circuit, where the second indication information indicates that the second optical module is in synchronization lock state.

In a possible implementation, the interface circuit is further configured to send third data to the second host, where the third data is obtained by replacing a part of data in the second data with a first preset sequence, and the first preset sequence is for synchronization of the second host.

In a possible implementation, the interface circuit is specifically configured to send the third data to the second host through a first data stream path of an AUI.

In a possible implementation, the interface circuit is specifically configured to send the first data to the second host through the first data stream path of the AUI.

In a possible implementation, the interface circuit is specifically configured to send the second indication information to the second host through an indication signal path of the AUI or an MDIO interface.

In a possible implementation, the second data includes N second codewords, and N is an integer greater than 1; and the processor is further configured to replace w second codewords in the N second codewords with the first preset sequence, to obtain the third data, where w is a positive integer less than or equal to N. Further, w is a positive integer greater than 1 and less than or equal to N.

In a possible implementation, a length of the first preset sequence is equal to a positive integer multiple of a code length of one second codeword.

In a possible implementation, the second data includes N second codewords, the second codeword includes a second information block and a second overhead block, and N is an integer greater than 1; and the processor is further configured to replace first information blocks in w second codewords in the N second codewords with the first preset sequence, to obtain the third data.

In a possible implementation, a length of the first preset sequence is less than or equal to a length of one second information block.

In a possible implementation, the second data includes N second codewords, the second codeword includes a second information block and a second overhead block, and N is an integer greater than 1; and the processor is further configured to replace second overhead blocks in w second codewords in the N second codewords with the first preset sequence, to obtain the third data.

In a possible implementation, a length of the first preset sequence is less than or equal to a length of one second overhead block.

In a possible implementation, the w second codewords are w consecutive or inconsecutive second codewords in the N second codewords. Intervals between the w inconsecutive second codewords may be the same or different. For example, a second codeword may be replaced with the first preset sequence every 2×j×5440/PCSL/L bits, where L represents the length of the second information block in the second codeword, PCSL represents a quantity of physical coding sublayer lanes, and a value of j may be a positive integer such as 1, 2, 3, or 4.

In a possible implementation, the second data includes a second preset sequence; and the processor is further configured to replace a second codeword with the first preset sequence from a boundary position of any second codeword in N second codewords, and stop the replacement when it is detected that the second preset sequence matches a second known preset sequence of the second optical module at least once, to obtain the third data.

In a possible implementation, the second preset sequence is at least one subsequence in an AM group.

In a possible implementation, the second data includes the N second codewords, and N is an integer greater than 1; and the processor is specifically configured to: decode the second data based on a sliding window with a preset quantity of bit, where the preset quantity of bits is less than the code length of the second codeword; after determining that the decoding succeeds at least once, perform decoding based on a sliding window with the code length of the second codeword, and collects statistics on a quantity of decoding successes in second decoding results; and if it is determined that the quantity of decoding successes in the second decoding results is greater than a third threshold, determine synchronization lock.

In a possible implementation, the second data includes the N second codewords, the second codeword includes the second information block and the second overhead block, and the second overhead block includes a third preset sequence; and if it is detected, within a preset time window, that a quantity of third preset sequences is greater than a fifth threshold, the processor is specifically configured to determine synchronization lock.

In a possible implementation, the first preset sequence is at least one subsequence in the AM group.

In a possible implementation, the processor is specifically configured to: decode the first data, to obtain M first decoding results, where the first decoding result includes a decoding success or a decoding failure, and M is an integer greater than 1; and if a quantity of decoding failures in the M first decoding results is greater than a first threshold, determine out-of-synchronization lock.

In a possible implementation, the first data includes Q first codewords, the first codewords include a first information block and a first overhead block, the first overhead block includes the third preset sequence, and Q is an integer greater than 1; and if it is detected, within a preset time window, that a quantity of third preset sequences is less than a fifth threshold, the processor is specifically configured to determine out-of-synchronization lock.

In a possible implementation, the interface circuit is further configured to receive third indication information from the second host through the MDIO interface, where the third indication information indicates that the second host is in out-of-synchronization lock state.

In another possible implementation, the communication apparatus may alternatively be a first optical module. The first optical module may include an interface circuit and a processor, and may perform corresponding functions of the first optical module in the foregoing method examples. For details, refer to the detailed descriptions in the method examples. Details are not described herein again.

In another possible implementation, the communication apparatus may alternatively be a second host. The second host may include an interface circuit and a processor, and may perform corresponding functions of the second host in the foregoing method examples. For details, refer to the detailed descriptions in the method examples. Details are not described herein again.

According to a tenth aspect, this application provides a communication apparatus. The communication apparatus is configured to implement the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, the method according to any one of the fifth aspect or the possible implementations of the fifth aspect, the method according to any one of the sixth aspect or the possible implementations of the sixth aspect, the method according to any one of the seventh aspect or the possible implementations of the seventh aspect, or the method according to any one of the eighth aspect or the possible implementations of the eighth aspect, and includes corresponding function modules separately configured to implement steps in the foregoing methods. The function may be implemented by using hardware, or may be implemented by hardware executing corresponding software. The hardware or software includes one or more modules corresponding to the foregoing functions.

In a possible implementation, the communication apparatus may be a second optical module. The second optical module may include a processing unit and a transceiver unit. These units may perform corresponding functions of the second optical module in the foregoing method examples. For details, refer to the detailed descriptions in the method examples. Details are not described herein again.

In another possible implementation, the communication apparatus may alternatively be a first optical module. The first optical module may include a transceiver unit and a processing unit. These units may perform corresponding functions of the first optical module in the foregoing method examples. For details, refer to the detailed descriptions in the method examples. Details are not described herein again.

In another possible implementation, the communication apparatus may alternatively be a second host. The second host may include a transceiver unit and a processing unit. These units may perform corresponding functions of the second host in the foregoing method examples. For details, refer to the detailed descriptions in the method examples. Details are not described herein again.

According to an eleventh aspect, this application provides a communication system. The communication system includes a first optical module, a second optical module, and a second host. The second optical module may be configured to perform the method according to any one of the first aspect or the possible implementations of the first aspect, the second host may be configured to perform the method according to any one of the second aspect or the possible implementations of the second aspect, and the first optical module may be configured to perform the method according to any one of the third aspect or the possible implementations of the third aspect. Alternatively, the communication system may include a first optical module and a second optical module. The second optical module may be configured to perform the method according to any one of the fourth aspect or the possible implementations of the fourth aspect, and the first optical module may be configured to perform the method according to any one of the fifth aspect or the possible implementations of the fifth aspect.

According to a twelfth aspect, this application provides a chip, including at least one processor and an interface circuit. Further, optionally, the chip may include a memory. The processor is configured to execute a computer program or instructions stored in the memory, so that the chip performs the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, the method according to any one of the fifth aspect or the possible implementations of the fifth aspect, the method according to any one of the sixth aspect or the possible implementations of the sixth aspect, the method according to any one of the seventh aspect or the possible implementations of the seventh aspect, or the method according to any one of the eighth aspect or the possible implementations of the eighth aspect.

According to a thirteenth aspect, this application provides a computer-readable storage medium. The computer-readable storage medium stores a computer program or instructions. When the computer program or the instructions are executed by a communication apparatus, the communication apparatus is enabled to perform the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, the method according to any one of the fifth aspect or the possible implementations of the fifth aspect, the method according to any one of the sixth aspect or the possible implementations of the sixth aspect, the method according to any one of the seventh aspect or the possible implementations of the seventh aspect, or the method according to any one of the eighth aspect or the possible implementations of the eighth aspect.

According to a fourteenth aspect, this application provides a computer program product. The computer program product includes a computer program or instructions. When the computer program or the instructions are executed by a communication apparatus, the communication apparatus is enabled to perform the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, the method according to any one of the fifth aspect or the possible implementations of the fifth aspect, the method according to any one of the sixth aspect or the possible implementations of the sixth aspect, the method according to any one of the seventh aspect or the possible implementations of the seventh aspect, or the method according to any one of the eighth aspect or the possible implementations of the eighth aspect.

For technical effects that can be achieved in any one of the ninth aspect to the fourteenth aspect, refer to the descriptions of the beneficial effects in the corresponding methods. Details are not described herein again.

### BRIEF DESCRIPTION OF DRAWINGS

FIG. 1 is a diagram of an architecture of a communication system according to this application;
FIG. 2a is a diagram of a structure of an optical module according to this application;
FIG. 2b is a diagram of a structure of another optical module according to this application;
FIG. 2c is a diagram of a structure of a host according to this application;
FIG. 3 is a diagram of communication between an optical module and a host according to this application;
FIG. 4 is a diagram of communication between optical modules according to this application;
FIG. 5 is a schematic flowchart of a method procedure of a data processing method according to this application;
FIG. 6a is a schematic flowchart of a method for obtaining first data by a first optical module according to this application;
FIG. 6b is a schematic flowchart of another method for obtaining first data by a first optical module according to this application;
FIG. 7a is a diagram of a structure of data to be sent by a host according to this application;
FIG. 7b is a diagram of a structure of data obtained through insertion of a second preset sequence according to this application;
FIG. 7c is a diagram of a structure of data obtained by processing to-be-sent data by a first host according to this application;
FIG. 7d is a diagram of a structure of an AM subsequence according to this application;
FIG. 8a is a diagram of a structure of first data according to this application;
FIG. 8b is a diagram of another structure of first data according to this application;
FIG. 9 is a schematic flowchart of a synchronization status determining method according to this application;
FIG. 10 is a schematic flowchart of another synchronization determining method according to this application;
FIG. 11 is a diagram of another structure of first data according to this application;
FIG. 12a is a schematic flowchart of a method procedure of another data processing method according to this application;
FIG. 12b is a schematic flowchart of a method procedure of another data processing method according to this application;
FIG. 13 is a schematic flowchart of a method procedure of still another data processing method according to this application;
FIG. 14 is a schematic flowchart of a method procedure of another data processing method according to this application;
FIG. 15 is a schematic flowchart of a method procedure of another data processing method according to this application;
FIG. 16 is a schematic flowchart of a method procedure of another data processing method according to this application;
FIG. 17 is a diagram of a structure of a communication apparatus according to this application; and
FIG. 18 is a diagram of a structure of a communication apparatus according to this application.

### DESCRIPTION OF EMBODIMENTS

The following describes in detail embodiments of this application with reference to accompanying drawings.

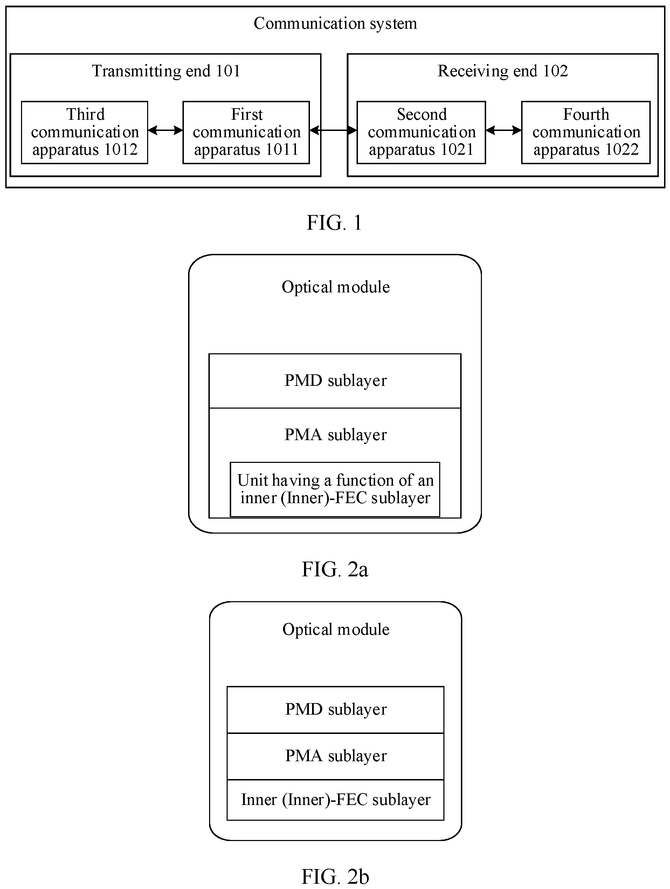

FIG. 1 is a diagram of an architecture of a communication system to which this application is applicable. The communication system may include a transmitting end 101 and a receiving end 102. Further, optionally, the transmitting end 101 may include a first communication apparatus 1011 and a third communication apparatus 1012, and the third communication apparatus 1012 may be referred to as a next-stage communication apparatus of the first communication apparatus 1011. The receiving end 102 may include a second communication apparatus 1021 and a fourth communication apparatus 1022. The fourth communication apparatus 1022 may be referred to as a next-stage communication apparatus of the second communication apparatus 1021, and the second communication apparatus 1021 may be referred to as a next-stage communication apparatus of the first communication apparatus 1011. The first communication apparatus 1011 and the third communication apparatus 1012 may be integrated, or may be two independent physical entities. The second communication apparatus 1021 and the fourth communication apparatus 1022 may be integrated, or may be two independent physical entities. The communication system may be, for example, an Ethernet communication system (both the transmitting end 101 and the receiving end 102 support the IEEE802.3 Ethernet protocol), an optical transmission communication system, an optical access communication system, a 5th-generation (5th-Generation, 5G) fronthaul communication system, or another communication system using FEC encoding.

The first communication apparatus 1011 and the second communication apparatus 1021 may be, for example, both optical modules. FIG. 2a is a diagram of a structure of an optical module according to this application. The optical module may include a physical media dependent (physical media dependent, PMD) sublayer and a physical medium attachment (physical medium attachment, PMA) sublayer. Further, the PMA sublayer includes a unit that can implement a function of an inner (Inner)-FEC sublayer. It may alternatively be understood as that the function of the inner-FEC sublayer is integrated into the PMA sublayer. FIG. 2b is a diagram of a structure of another optical module according to this application. The optical module may include a PMD sublayer, a PMA sublayer, and an inner-FEC sublayer. It may alternatively be understood as that the inner-FEC sublayer and the PMA sublayer are two independent sublayers.

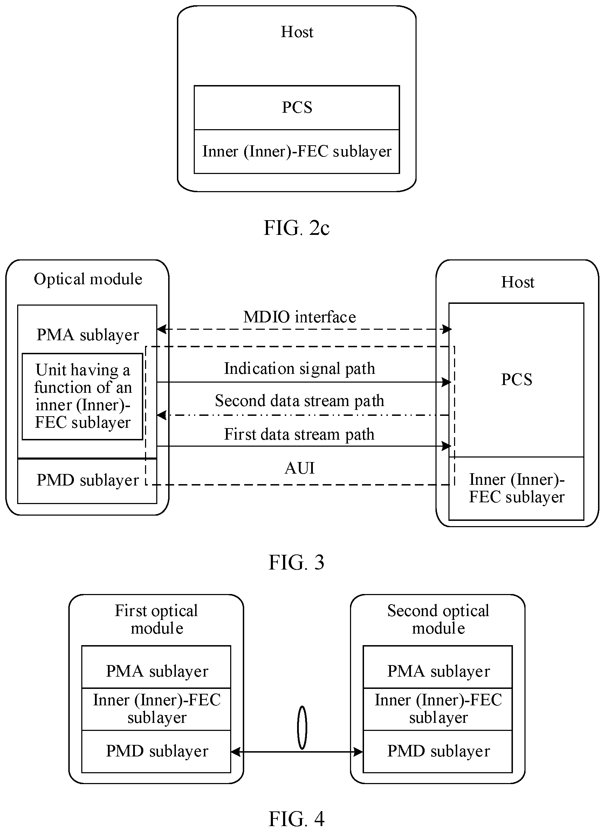

The third communication apparatus 1012 and the fourth communication apparatus 1022 may be, for example, both hosts. FIG. 2c is a diagram of a structure of a host according to this application. The host may include a physical coding sublayer (physical coding sublayer, PCS) and an inner-FEC sublayer. Alternatively, the host may include a PCS, and the PCS includes a unit for implementing a function of an inner-FEC sublayer.

Based on the foregoing content, FIG. 3 is a diagram of communication between an optical module and a host according to this application. The structure shown in FIG. 2b is used as an example of a structure of the optical module in this example. The optical module and the host may communicate with each other through an AUI between the PMA sublayer in the optical module and the PCS in the host. Further, the AUI between the PMA sublayer in the optical module and the PCS in the host includes a first data stream path, a second data stream path, and an indication signal path (which is also referred to as a data validity indication signal path), where the first data stream path is a path for the optical module to send data to the host, the second data stream path is a path for the host to send data to the optical module, and the indication signal path is a path for the optical module to send indication information to the host. The first data stream path is, for example, inst:IS_UNITDATA.indication. The second data stream path is, for example, inst:IS_UNITDATA.request. If the PCS is connected to the FEC sublayer at a next stage, the second data stream path inst:IS_UNITDATA.request in the AUI may be represented as FEC:IS_UNITDATA.request. The indication signal path is, for example, inst:IS_SIGNAL.indication. It should be noted that the AUI between the host and the optical module may also be referred to as a serializer/deserializer (serializer/deserializer, SerDes) interface in product implementation. Further, optionally, an MDIO interface may be included between the optical module and the host, and the optical module and the host may alternatively exchange indication information, data, or the like through the MDIO interface. In an optical internetworking forum (optical internetworking forum, OIF) organization of an international organization for standardization, the MDIO interface is also referred to as a common management interface specification (common management interface specification, CMIS) interface. Generally, the MDIO interface is referred to as the MDIO interface from a perspective of a host side, and is referred to as the CMIS interface from a perspective of an optical module side.

FIG. 4 is a diagram of communication between optical modules according to this application. In this example, an optical module at a transmitting end may be referred to as a first optical module, and an optical module at a receiving end may be referred to as a second optical module. The structure shown in FIG. 2b is used as an example of both a structure of the first optical module and a structure of the second optical module in this example. The first optical module and the second optical module may be connected to each other through a transmission medium (for example, an optical fiber, a backplane, a copper cable, or an active optical cable). Specifically, a PMD sublayer in the first optical module may communicate with a PMD sublayer in the second optical module through the transmission medium. For example, the first optical module may load to-be-transmitted data on an optical carrier, couple the to-be-transmitted data to the optical fiber, and transmit the to-be-transmitted data to the PMD sublayer in the second optical module through the optical fiber. Further, the PMD sublayer may transmit the to-be-transmitted data to a PMA sublayer.

It should be noted that the communication shown in FIG. 3 or FIG. 4 may be duplex communication independent of each other, or may be duplex communication with a feedback. This is not limited in this application.

The communication system may be used in a plurality of fields, for example, an augmented reality/virtual reality (augmented reality/virtual reality, AR/VR) field, an artificial intelligence (artificial intelligence, AI) field, a data center field, or a cloud application field.

It should be noted that the system architecture described in this application is intended to describe the technical solutions in this application more clearly, and does not constitute a limitation on the technical solutions provided in this application.

As described in the background, a currently used data synchronization method needs long time, resulting in a long data delay.

In view of this, this application provides a data processing method. The data processing method helps reduce data synchronization time.

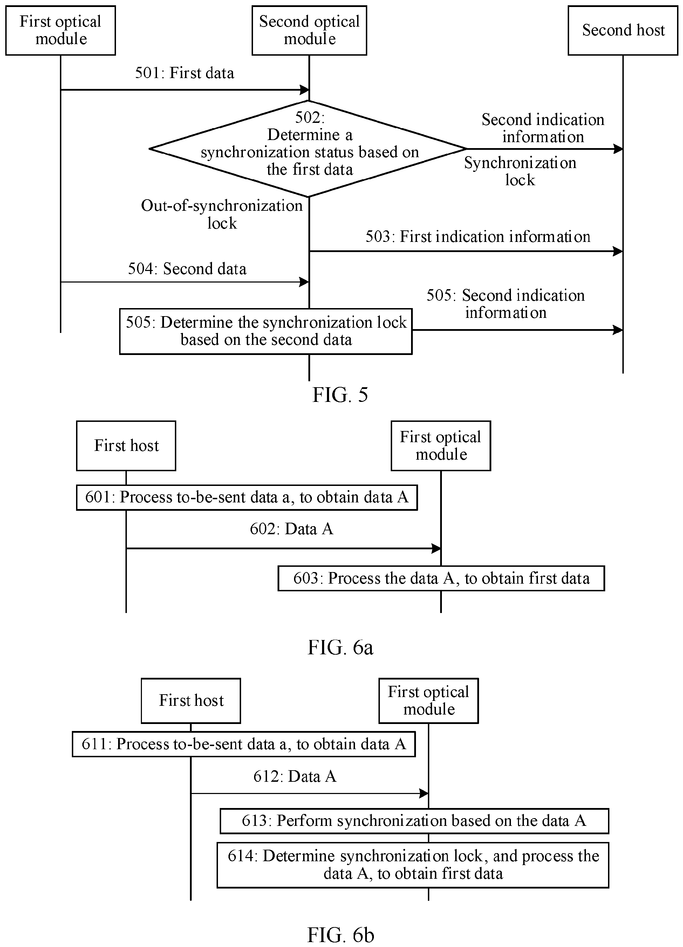

Based on the foregoing content, the data processing method provided in this application is described below in detail with reference to FIG. 5 to FIG. 16.

For ease of description of the solutions, in the following descriptions, an example in which a second communication apparatus is a second optical module, a first communication apparatus is a first optical module, a third communication apparatus is a first host, and a fourth communication apparatus is a second host is used. In other words, in the following descriptions, the first optical module may be used instead of the first communication apparatus, the second optical module may be used instead of the second communication apparatus, the first host may be used instead of the third communication apparatus, and the second host may be used instead of the fourth communication apparatus.

### Embodiment 1

FIG. 5 is a schematic flowchart of a method procedure of a data processing method according to this application. A first optical module in the method may be the first communication apparatus 1011 in FIG. 1, and a second optical module may be the second communication apparatus 1021 in FIG. 1. For specific structures of the first optical module and the second optical module, refer to the descriptions in FIG. 2a or FIG. 2b. The method includes the following steps.

Step 501: The first optical module sends first data to the second optical module. Accordingly, the second optical module receives the first data from the first optical module.

With reference to FIG. 4, the first optical module may send the first data to the second optical module through a transmission medium. Data sent by the first optical module to the second optical module may be an optical signal, and the transmission medium may also be referred to as an optical lane. The second optical module may convert the received optical signal into an electrical signal, then convert the electrical signal into a digital signal, and then perform subsequent processing based on the digital signal.

For manners in which the first optical module obtains the first data, refer to the following descriptions in FIG. 6a and FIG. 6b. Details are not described herein.

Step 502: The second optical module determines a synchronization status based on the first data.

The synchronization status includes out-of-synchronization lock or synchronization lock. If out-of-synchronization lock is determined, the following step 503 to step 505 are performed; or if synchronization lock is determined, the second optical module sends second indication information to a second host.

Out-of-synchronization lock may also be referred to as data unaligned, data block unaligned, codeword boundary unaligned, inner codeword boundary unaligned, Hamming codeword boundary unaligned, or the like. Because the second optical module implements synchronization based on an inner codeword, out-of-synchronization lock is also referred to as inner codeword out-of-lock, inner codeword out-of-synchronization lock, or the like. Synchronization lock may also be referred to as data aligned, data block aligned, codeword boundary aligned, inner codeword lock, inner codeword synchronization lock, Hamming codeword boundary aligned, or the like.

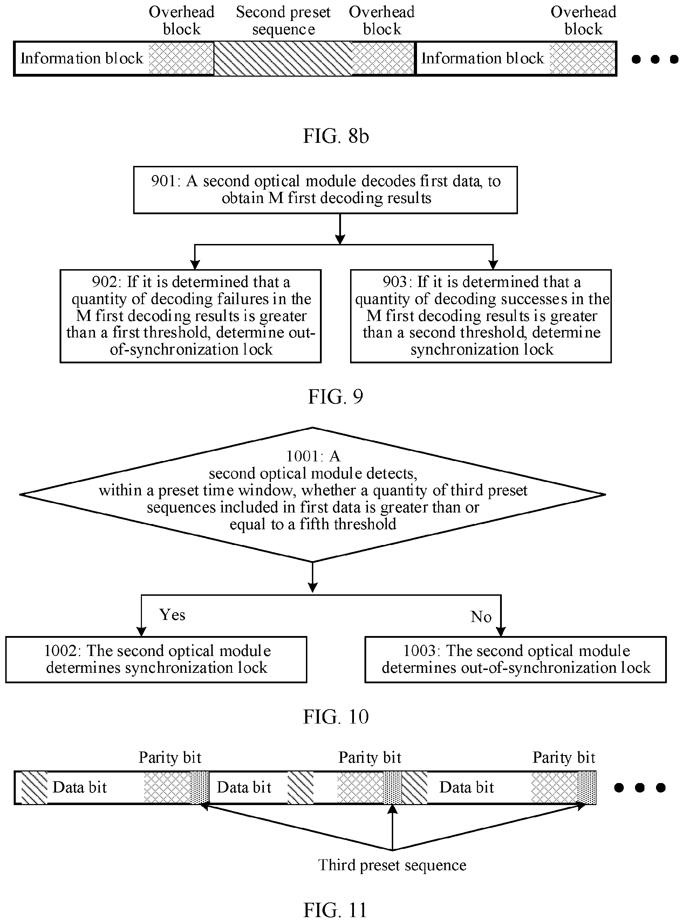

For a process in which the second optical module determines the synchronization status based on the first data, refer to descriptions of the following possible implementation 1 (FIG. 9) and implementation 2 (FIG. 10).

Step 503: The second optical module sends first indication information to the second host. Accordingly, the second host receives the first indication information from the second optical module.

The first indication information indicates that the second optical module is in out-of-synchronization lock state.

With reference to FIG. 3, in a possible implementation, the second optical module may send the first indication information to the second host through an indication signal path of an AUI, where the indication signal path may be, for example, inst:IS_SIGNAL.indication. In another possible implementation, the second optical module may alternatively send the first indication information to the second host through an MDIO interface (which is also referred to as a CMIS interface).

A specific form of the first indication information may be specified in a protocol, or may be pre-negotiated between the second optical module and the second host. This is not limited in this application. For example, the first indication information is represented by using "0".

Step 504: The first optical module sends second data to the second optical module. Accordingly, the second optical module receives the second data from the first optical module.

The second data and the first data belong to a same data stream. In other words, the first optical module sends the data stream to the second optical module, where the first data and the second data are two parts of data in the data stream. It should be noted that manners in which the first optical module obtains the second data are the same as the manners in which the first optical module obtains the first data. For details, refer to the following descriptions in FIG. 6a and FIG. 6b. Details are not described herein.

It should be noted that the foregoing step 503 and step 504 are not sequential. Step 503 may be performed before step 504, step 504 may be performed before step 503, or step 503 and step 504 may be performed synchronously. FIG. 5 is merely a possible example.

Step 505: The second optical module determines synchronization lock based on the second data, and sends the second indication information to the second host.

The second indication information indicates that the second optical module is in synchronization lock state. It should be noted that a specific form of the second indication information may be specified in the protocol, or may be pre-negotiated between the second optical module and the second host. This is not limited in this application For example, the second indication information is represented by using "1".

With reference to FIG. 3, in a possible implementation, the second optical module may send the second indication information to the second host through the indication signal path of the AUI, where the indication signal path may be, for example, inst:IS_SIGNAL.indication. In another possible implementation, the second optical module may alternatively send the second indication information to the second host through the MDIO interface (which is also referred to as the CMIS interface).

In a possible implementation, the second optical module may first perform synchronization based on the second data until synchronization lock is achieved. The second data may include N second codewords, where N is an integer greater than 1. The second codeword may be, for example, an FEC codeword. A structure of the FEC codeword may be (N, K, m), where N is a quantity of bits included in a code length of the FEC codeword, K is a quantity of bits included in an information bit, and m is an order of a Galois field in which the FEC codeword is located. A value of m is not considered in this application. For ease of description of the solution, the FEC codeword is represented by using (N, K) subsequently. Specifically, the FEC codeword may include but is not limited to a Hamming (Hamming) codeword or a Bose, Ray-Chaudhuri, and Hocquenghem (BCH) codeword. The Hamming codeword may include but is not limited to a Hamming codeword (128, 120) or a Hamming codeword (180, 170).

Specifically, the second optical module may decode the second data based on a sliding window with a preset quantity of bits, where the preset quantity of bits is less than a code length of the second codeword included in the second data. Further, after determining that the decoding succeeds at least once, the second optical module performs decoding based on a sliding window with the code length of the second codeword, and collects statistics on a quantity of second decoding results (including a decoding success and a decoding failure); and if a quantity of decoding successes in the second decoding results is greater than a third threshold, the second optical module determines synchronization lock; or if a quantity of decoding failures in the second decoding results is greater than a fourth threshold, the second optical module determines out-of-synchronization lock, and may continue to perform synchronization based on new data (namely, another part of data that belongs to the same data stream as the first data and the second data) received from the first optical module. Further, the second decoding result may be a decoding success identifier or a decoding failure identifier that is output by a decoder, or may be an intermediate parameter (which is also referred to as a syndrome (syndrome)) generated in a decoding process. For example, the second decoding result may be represented by using eight bits. 00000000 indicates the decoding success. If a non-zero bit appears in the eight bits, it indicates the decoding failure. Alternatively, the second decoding result may be in another representation form in which the decoding success and the decoding failure may be distinguished. This is not limited in this application. If the second decoding result is the decoding success identifier or the decoding failure identifier that is output by the decoder, statistics on whether a quantity of decoding success identifiers is greater than the third threshold and whether a quantity of decoding failure identifiers is greater than the fourth threshold may be collected. If the second decoding result is the syndrome (syndrome) generated in the decoding process, statistics on whether a quantity of cases in which the eight bits are all 0 is greater than the third threshold and whether a quantity of cases in which there is a non-zero bit in the eight bits is greater than the fourth threshold may be collected.

For example, a length of the second data is *x*×128 bits, where *x* is an integer greater than or equal to 2. For example, the code length of the second codeword included in the second data is 128 bits. For example, the preset quantity of bits is one. One decoder A is used as an example. Specifically, 0^{th} to 127^{th} bits in the second data are input to the decoder A. Then, decoding is performed based on a 1-bit sliding window. That is, 1^{st} to 128^{th} bits are input to the decoder A next time. The rest can be deduced by analogy. By the time that the decoding succeeds at least once, decoding is performed based on the sliding window with the code length (128 bits) of the second codeword, and statistics on the quantity of second decoding results (including the decoding success and the decoding failure) start to be collected. For example, the 0^{th} to 127^{th} bits in the second data are input to the decoder A, and the decoder A outputs a decoding failure; then the 1^{st} to 128^{th} bits are input to the decoder A, and the decoder A outputs a decoding failure; then 2^{nd} to 129^{th} bits are input to the decoder A, and the decoder A outputs a decoding failure; and then 3^{rd} to 130^{th} bits are input to the decoder A, and the decoder A outputs a decoding success. Statistics on the second decoding results start to be collected. For example, a quantity of decoding successes in the second decoding results may be recorded as one (or zero). Then, 131^{st} to 258^{th} bits are input to the decoder A. Decoding is performed based on the 128-bit sliding window. The rest can be deduced by analogy to obtain H second decoding results. It may be understood that, if the decoder A outputs the decoding success, it indicates that one complete second codeword in one piece of second data is input to the decoder A. In other words, the 3^{rd} to 130^{th} bits correspond to the complete second codeword, and this indicates that 0^{th} to 255^{th} bits are lost in a process in which the first optical module sends the second data to the second optical module.

Two decoders (which are a decoder B and a decoder C) are used as an example. 0^{th} to 127^{th} bits in the second data are input to the decoder B, 1^{st} to 128^{th} bits are input to the decoder C, 2^{nd} to 129^{th} bits are input to the decoder B, 3^{rd} to 130^{th} bits are input to the decoder C, and so on. The bits input to the decoder B are decoded based on a 1-bit sliding window. By the time that the decoding succeeds at least once, decoding is performed based on a 128-bit sliding window, and statistics on second decoding results start to be collected. The bits input to the decoder C are decoded based on the 1-bit sliding window. By the time that the decoding succeeds at least once, decoding is performed based on the 128-bit sliding window, and statistics on second decoding results start to be collected. H second decoding results obtained by decoding the second data are a sum of a quantity of the second decoding results of the decoder B and a quantity of the second decoding results of the decoder C.

With reference to FIG. 3, in a possible implementation, the second optical module may send the second indication information to the second host through the indication signal path of the AUI, where the indication signal path may be, for example, inst:IS_SIGNAL.indication. In another possible implementation, the second optical module may send the second indication information to the second host through the MDIO interface.

It can be learned from the foregoing step 501 to step 505 that, after determining out-of-synchronization lock, the second optical module sends, to the second host, the first indication information indicating that the second optical module is in out-of-synchronization lock state, so that the second host can determine that the first data is invalid data, to help reduce computation overheads of the second host. Further, after determining synchronization lock, the second optical module sends, to the second host, the second indication information indicating that the second optical module is in synchronization lock state, so that the second host can quickly start (or enter) a synchronization process without waiting for long time, to help reduce data synchronization duration of the second host, and help shorten a waiting delay of a communication system.

The following shows two possible manners in which the first optical module obtains the first data as examples.

Manner a: The first optical module does not synchronize data A from a first host.

FIG. 6a is a schematic flowchart of a method for obtaining first data by a first optical module according to this application. The method includes the following steps.

Step 601: A first host processes to-be-sent data a, to obtain data A.

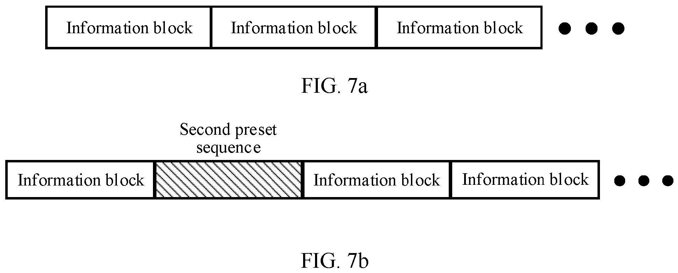

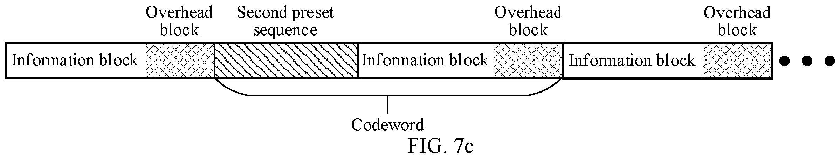

In a possible implementation, the first host performs insertion of a second preset sequence (refer to FIG. 7b), interleaving, encoding, and the like on the data a (refer to FIG. 7a), to obtain the data A (refer to FIG. 7c). It may be understood that the processing performed by the first host on the data a may further include Gray mapping and the like. This is not limited in this application.

For example, the second preset sequence may be at least one subsequence in an AM group. For ease of description of the solution, the following provides descriptions by using an example in which the second preset sequence is an AM subsequence.

Specifically, for each physical coding sublayer lane, a corresponding AM subsequence may be inserted into the data a, where one physical coding sublayer lane corresponds to one AM subsequence. For example, for a physical coding sublayer lane D0, an AM 0 subsequence is inserted into the data a; for a physical coding sublayer lane D1, an AM 1 subsequence is inserted into the data a; and so on. The AM subsequence is a sequence in the AM group, and the AM group includes the AM 0 subsequence, the AM 1 subsequence, ....

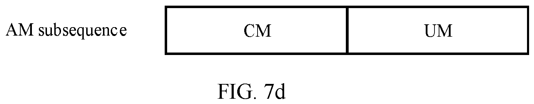

FIG. 7d is a diagram of a structure of an AM subsequence according to this application. The AM subsequence includes a common marker (common marker, CM) and a unique marker (unique marker, UM). The CM is a first half part of the AM subsequence, and is for AM lock (AM Lock) and lane-to-lane deskew (Deskew). The UM is a second half part of the AM subsequence, and is for physical coding sublayer lane reorder (Reorder).

Further, an interval between two adjacent AM subsequences may be equal to a total quantity of codewords of m physical sublayer lanes×a length of one codeword/a quantity m of the physical sublayer lanes. For example, for each physical coding sublayer lane, an AM subsequence is inserted once every 8192×5440/16 bits, where 8192 represents a total quantity of codewords of 16 physical sublayer lanes, 5440 represents a length of one codeword, and 16 represents a quantity of the physical sublayer lanes.

With reference to FIG. 2c, 100GE Ethernet encoding is used as an example. Data a from clients at a media access control (media access control, MAC) layer and a higher layer passes through a reconciliation (reconciliation) sublayer. The reconciliation sublayer translates the data a from the clients at the MAC layer and the higher layer, and sends translated data a to a 100GBASE-R physical coding sublayer (physical coding sublayer, PCS) through a 100 Gbits per second (bits per second, bps, b/s) media independent interface (100 Gb/s media independent interface, CGMII). An operation such as insertion of an AM on the data a is performed at the PCS, and processed data a is sent to an inner-FEC sublayer for encoding. The inner-FEC sublayer may be, for example, a Reed-Solomon forward error correction (Reed-Solomon forward error correction, RS-FEC) encoder. The RS-FEC encoder in a 100GE Ethernet uses one RS (544, 514, 10) codeword.

A 200GE Ethernet encoding scheme is used as an example. Data a from clients at a MAC layer and a higher layer passes through a reconciliation sublayer. The reconciliation sublayer translates the data a from the clients at the MAC layer and the higher layer, and sends translated data a to a 200GBASE-R PCS through a 200GMII. An operation such as insertion of an AM on the data is performed at the PCS, and processed data is sent to an RS-FEC encoder for encoding. The 200GE Ethernet RS-FEC encoder uses two RS (544, 514, 10) codewords, and the data from the PCS is sent to the two RS codewords in a 10-bit (bit) round robin distribution manner.

A 400GE Ethernet encoding scheme is used as an example. Data from clients at a MAC layer and a higher layer passes through a reconciliation sublayer. The reconciliation sublayer translates the data a from the clients at the MAC layer and the higher layer, and sends translated data a to a 400GBASE-R PCS through a 400GMII. An operation such as insertion of an AM on the data a is performed at the PCS, and processed data a is sent to an RS-FEC encoder for encoding. The 400GE Ethernet RS-FEC encoding uses two RS (544, 514, 10) codewords, and the data a from the PCS is sent to the two RS codewords in a 10-bit (bit) round robin distribution manner.

The foregoing provides the examples in which RS encoding is used in the 100GE, 200GE, and 400GE Ethernet encoding schemes at the PCS. When an Ethernet evolves to 800GE, a single-wavelength rate increases from 100 Gbps in 400GE to 200 Gbps, and encoding may alternatively be implemented in another manner. An encoding scheme is not limited in this application.

Interleaving may be performed by an interleaver. The interleaver may be represented by using, for example, *πₑ.* The interleaver *πₑ* may be an interleaver consisting of a multiplexer (Mux) and 10-bit symbol distribution (10-bit symbol distribution).

Step 602: The first host sends the data A to the first optical module. Accordingly, the first optical module receives the data A from the first host.

In a possible implementation, the first host may send the data A to the first optical module through a second data stream path of an AUI. Accordingly, the first optical module may receive the data A from the first host through the second data stream path of the AUI. Alternatively, the first host may send the data A to the first optical module through an MDIO interface. Accordingly, the first optical module may receive the data A from the first host through the CMIS interface.

Step 603: The first optical module processes the data A, to obtain the first data.

Specifically, the first optical module performs encoding, interleaving, and other processing on the data A, to obtain the first data. Herein, reference may be made to the foregoing processing performed by the first host on the data a. Specifically, the "data a" may be replaced with the "data A". Details are not described herein again.

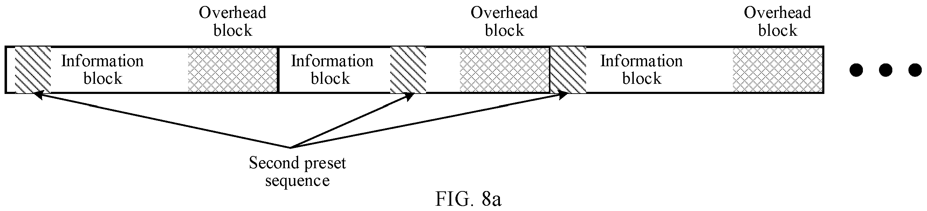

Based on the foregoing step 601 to step 603, for a structure of the obtained first data, refer to FIG. 8a. The first data includes Q first codewords, where Q is an integer greater than 1. The first codeword includes a first information block and a first overhead block. The first information block is for carrying valid data, and may also be referred to as a data bit. The first overhead block is for correctly recovering data, and may also be referred to as a parity bit. The first overhead block is usually added after the first optical module encodes the valid data. It may alternatively be understood as that, based on the foregoing manner a, an AM subsequence in the first data obtained by the first optical module is scattered for distribution.

Manner b: The first optical module performs synchronization based on data A from a first host.

FIG. 6b is a schematic flowchart of another method for obtaining first data by a first optical module according to this application. The method includes the following steps.

Step 611: A first host processes to-be-sent data a, to obtain data A.

For step 611, refer to the descriptions of the foregoing step 601. Details are not described herein again.

Step 612: The first host sends the data A to the first optical module. Accordingly, the first optical module receives the data A from the first host.

For step 612, refer to the descriptions of the foregoing step 602. Details are not described herein again.

Step 613: The first optical module performs synchronization based on the data A.

Specifically, for each physical coding sublayer lane, if it is determined that a CM in an AM subsequence (namely, a second preset sequence) in the data A matches a CM in a known AM subsequence of the first optical module at least once, synchronization lock is determined. With reference to FIG. 7d, a physical coding sublayer lane D0 is used as an example. If it is detected that a CM in an AM 0 subsequence in the data A matches an AM in a known AM 0 subsequence of the first optical module at least once, synchronization lock is determined. Symbol (10 bits) boundaries of RS codewords on a first host side are aligned. An AM subsequence is inserted at a boundary of an RS symbol, so that finding the AM subsequence is equivalent to finding the boundary of the RS symbol, and subsequent processing may be performed based on a length of the RS symbol.

It may be understood that, during synchronization, the first optical module does not send valid data to a second optical module until the first optical module is in synchronization lock state.

It should be noted that, if the first optical module cannot implement synchronization based on the data A, the first optical module may return the data A to the first host. Accordingly, the first host receives the data A from the first optical module, and decodes the data A. If the first host fails to decode the data A, it indicates that an AUI between the first host and the first optical module is faulty. If the first host successfully decodes the data A, it indicates that the first optical module is faulty in a synchronization process. Further, AM subsequences may be inserted into the data a more densely for the first optical module to implement synchronization. For example, if an AM 0 subsequence is inserted into the data a once every 8192×5440/16 bits in the foregoing step 611, the denser insertion may be inserting the AM 0 subsequence once every less than 8192×5440/16 bits.

Step 614: The first optical module determines synchronization lock, and processes the data A, to obtain the first data.

Specifically, the first optical module removes the AM subsequence (namely, the second preset sequence) from the data A; interleaves data A obtained by removing the AM subsequence; then re-inserts the removed AM subsequence after the interleaving, to obtain data B; and performs encoding and other operations on the data B, to obtain the first data. It may alternatively be understood as that, when the processing performed by the first optical module on the data A includes the interleaving, the AM subsequence skips an interleaver, so that the AM subsequence is not scattered. It may be understood that the AM subsequence is a fixed sequence both before and after the encoding.

Based on the foregoing step 611 to step 614, for a structure of the obtained first data, refer to FIG. 8b. In other words, based on the foregoing manner b, the AM subsequence in the first data obtained by the first optical module is not scattered, and is completely distributed in the data.

The following shows two possible implementations in which the second optical module determines the synchronization status based on the first data as examples.

Implementation 1: The second optical module determines the synchronization status based on a first decoding result.

FIG. 9 is a schematic flowchart of a synchronization status determining method according to this application. The method includes the following steps.

Step 901: A second optical module decodes first data, to obtain M first decoding results.

In a possible implementation, the first data may include Q first codewords. The first codeword may be, for example, an FEC codeword. For a structure of the FEC codeword, refer to the foregoing related descriptions. Details are not described herein again.

The first decoding result includes a decoding success or a decoding failure. Specifically, each time one first codeword is input to a decoder, the decoder outputs one first decoding result of the first codeword. For example, the first codeword is a Hamming codeword (128, 120). Every 128 bits are used as one first codeword to be input to the decoder for decoding, and the decoder outputs one first decoding result of the first codeword. By analogy, statistics on M first decoding results may be collected by decoding the first data.

Step 902: If the second optical module determines that a quantity of decoding failures in the M first decoding results is greater than a first threshold, the second optical module determines out-of-synchronization lock.

Step 903: If the second optical module determines that a quantity of decoding successes in the M first decoding results is greater than a second threshold, the second optical module determines synchronization lock.

The second threshold is different from the first threshold. For example, the first threshold may be, for example, rounding up M×90%, and the second threshold may be, for example, rounding up M×50%. It should be noted that specific values of the first threshold and the second threshold are not limited in this application.

In a possible implementation, the first decoding result may be a decoding success identifier or a decoding failure identifier that is output by the decoder, or may be an intermediate parameter (which is also referred to as a syndrome (syndrome)) generated in a decoding process. For example, the first decoding result may be represented by using eight bits. 00000000 indicates the decoding success. If a non-zero bit appears in the eight bits, it indicates the decoding failure. Alternatively, the first decoding result may be in another representation form in which the decoding success and the decoding failure may be distinguished. This is not limited in this application. If the first decoding result is the decoding success identifier or the decoding failure identifier that is output by the decoder, statistics on whether a quantity of decoding success identifiers is greater than the first threshold and whether a quantity of decoding failure identifiers is greater than the second threshold may be collected. If the first decoding result is the syndrome (syndrome) generated in the decoding process, statistics on whether a quantity of cases in which the eight bits are all 0 is greater than the first threshold and whether a quantity of cases in which there is a non-zero bit in the eight bits is greater than the second threshold may be collected.

Further, the following is performed to improve accuracy of the determined decoding success or decoding failure. For example, a code length of the first codeword is 128 bits. A last one bit in 128 bits in each first codeword in the first data may be obtained by performing a first operation on first 127 bits. After the decoder outputs the first decoding result indicating the decoding success, the first operation may be further performed on the first 127 bits in the 128 bits, to determine whether the one bit obtained in an operation result is consistent with a last one bit in the 128 bits input to the decoder. If the two are consistent, the decoding success is determined; or if the two are inconsistent, the decoding failure is determined. For another example, a code length of the first codeword is 128 bits. Last three bits in 128 bits in each first codeword in the first data may be obtained by performing a first operation on first 125 bits. After the decoder outputs the first decoding result indicating the decoding success, the first operation may be further performed on the first 125 bits in the 128 bits, to determine whether the three bits obtained in an operation result is consistent with last three bits in the 128 bits input to the decoder. If the two are consistent, the decoding success is determined; or if the two are inconsistent, the decoding failure is determined. For another example, a code length of the first codeword is 180 bits. Last two bits in 180 bits in each first codeword in the first data may be obtained by performing a first operation on first 178 bits. After the decoder outputs the first decoding result indicating the decoding success, the first operation may be further performed on the first 178 bits in the 180 bits, to determine whether the two bits obtained in an operation result is consistent with last two bits in the 180 bits input to the decoder. If the two are consistent, the decoding success is determined; or if the two are inconsistent, the decoding failure is determined. A method of the first operation of a first optical module and the second optical module may be pre-negotiated, or may be pre-stored. This is not limited in this application.

It should be noted that the foregoing step 902 and step 903 do not indicate a sequence. If step 902 is performed, step 903 is not performed; or if step 903 is performed, step 902 is not performed.

Implementation 2: The second optical module determines synchronization depending on whether the first overhead block (which is also referred to as overhead (overhead, OH)) in the first codeword included in the first data includes a third preset sequence.

A preset sequence in this application is a sequence with a fixed length or bit values, and is a sequence known to both a receiving side and a transmitting side. For example, the third preset sequence may be an AM subsequence.

FIG. 10 is a schematic flowchart of another synchronization determining method according to this application. The method includes the following steps.

Step 1001: A second optical module detects, within a preset time window, whether a quantity of third preset sequences included in first data is greater than or equal to a fifth threshold; and if the quantity is greater than the fifth threshold, the second optical module performs step 1002; or if the quantity is less than the fifth threshold, the second optical module performs step 1003.

FIG. 11 is a diagram of another structure of first data into which third preset sequences are inserted according to this application. In this example, the structure shown in FIG. 8a is used as an example of the structure of the first data. For example, a length of one first codeword is 128 bits. First 120 bits are a first information block, eight bits are a first overhead block, and the third preset sequence occupies a part of bits in the first overhead block. For example, the third preset sequence may be three bits, for example, 001, 100, or 010. For example, last three bits in the first overhead block are the third preset sequence. For another example, first three bits in the first overhead block are the third preset sequence. It may be understood that the third preset sequence may occupy any three bits in the first overhead block. For example, the third preset sequence may alternatively be two bits, for example, 01 or 10. For example, last two bits in the first overhead block are the third preset sequence. In addition, the third preset sequence may alternatively be more than three bits or less than three bits. This is not limited in this application.

There is an association relationship between the preset time window and the fifth threshold. For example, the preset time window may be, for example, 200 nanoseconds (ns), and the corresponding fifth threshold may be, for example, 128 times. For another example, the preset time window may be, for example, 100 ns, and the corresponding fifth threshold may be, for example, 64 times. Further, a preset quantity of bits is equal to a product of the preset time window and a transmission rate.

Step 1002: The second optical module determines synchronization lock.

Step 1003: The second optical module determines out-of-synchronization lock.

Through the foregoing step 1001 to step 1003, the third preset sequence occupies the part of bits in the first overhead block, without increasing an amount of transmitted data. In addition, the first overhead block is added after the first optical module encodes valid data. Therefore, the second optical module can determine whether synchronization is performed based on the quantity of third preset sequences included in the first data, without decoding the first data. The implementation is simple.

Based on the manners in which the first module obtains the first data, the following provides two different data processing methods as examples.

Method 1: The first optical module obtains the first data based on the foregoing manner a.

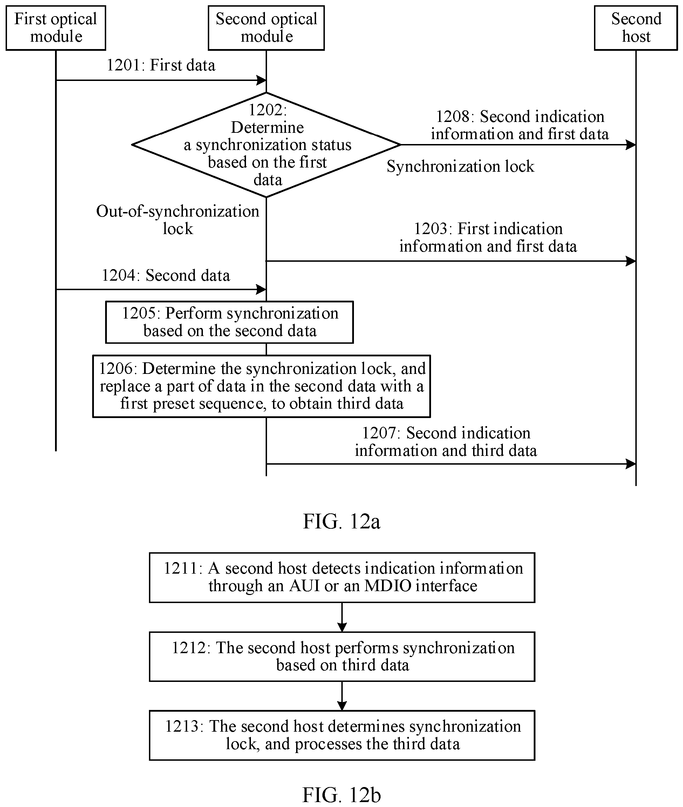

FIG. 12a is a schematic flowchart of a method procedure of another data processing method according to this application. The method mainly involves data processing on a second optical module side. The method includes the following steps.

Step 1201: A first optical module sends first data to a second optical module. Accordingly, the second optical module receives the first data from the first optical module.

In this example, the first optical module obtains the first data in the foregoing manner a. For step 1201, refer to the descriptions of the foregoing step 501. Details are not described herein again.

Step 1202: The second optical module determines a synchronization status based on the first data.

If out-of-synchronization lock is determined, the following step 1203 to step 1206 are performed; or if the second optical module is in synchronization lock state, the following step 1208 is performed.

For step 1202, refer to the descriptions of the foregoing step 502. Details are not described herein again.

Step 1203: The second optical module sends first indication information and the first data to a second host. Accordingly, the second host receives the first indication information and the first data that are from the second optical module.

In a possible implementation, the second optical module may send the first indication information to the second host through an indication signal path of an AUI or through an MDIO interface, and may send the first data to the second host through a first data stream path of the AUI.

The second optical module may send the first data to the second host through the first data stream path of the AUI. For detailed descriptions of the sending the first indication information to the second host by the second optical module, refer to the descriptions of the foregoing step 503. Details are not described herein again.

The second optical module sends, to the second host, the first indication information indicating that the second optical module is in out-of-synchronization lock state, to indicate that the first data is invalid data. Therefore, after receiving the first indication information, the second host may determine that the first data is the invalid data, and further discard the first data.

Step 1204: The first optical module sends second data to the second optical module. Accordingly, the second optical module receives the second data from the first optical module.

For step 1204, refer to the descriptions of the foregoing step 504. Details are not described herein again.

Step 1205: The second optical module performs synchronization based on the second data.

For step 1205, refer to the descriptions of the foregoing step 505. Details are not described herein again.

Step 1206: The second optical module determines synchronization lock, and replaces (in other words, overwrites, updates, modifies, or the like) a part of data in the second data with a first preset sequence, to obtain third data.

In a possible implementation, the second data includes N second codewords, and the second codeword includes a second information block and a second overhead block.

The following shows three possible manners of obtaining the third data as examples

Manner A: Replace a complete second codeword with the first preset sequence.

In a possible implementation, on each physical coding sublayer lane, w second codewords in the N second codewords are replaced with the first preset sequence, where w is a positive integer less than or equal to N. Further, w is a positive integer greater than 1 and less than or equal to N. When w is greater than 2, a case in which the second host cannot accurately determine a synchronization status because a part of data in the second data is lost in a transmission process can be further avoided. In other words, when w is greater than 2, this help improve accuracy of synchronization of the second host.

Further, optionally, a length of the first preset sequence is equal to a positive integer multiple of a code length of one second codeword. For example, the code length of the second codeword is 128 bits, and the length of the first preset sequence is also 128 bits. For another example, the code length of the second codeword is 128 bits, and the length of the first preset sequence is 2×128 bits.

The complete second codeword is replaced with the first preset sequence, so that the second host can quickly determine a boundary of each second codeword in the received second data. In this way, duration needed for synchronization can be reduced, and complexity of synchronization computation on a second host side can be reduced.

Manner B: Replace the second overhead block in the second codeword with the first preset sequence.

In a possible implementation, on each physical coding sublayer lane, second overhead blocks in w second codewords in the N second codewords are replaced with the first preset sequence.

Further, optionally, a length of the first preset sequence is less than or equal to a length of the second overhead block. For example, a code length of the second codeword is 128 bits, a length of the second information block is 120 bits, the length of the second overhead block is eight bits, and the length of the first preset sequence may be eight bits.

The second overhead block in the second codeword is replaced with the first preset sequence, so that normal transmission of valid data cannot be affected. Further, when the length of the first preset sequence is equal to the length of the second overhead block, the second host can quickly determine a boundary of the second codeword in the received second data, to reduce duration needed for synchronization.

Manner C: Replace the second information block in the second codeword with the first preset sequence.

In a possible implementation, on each physical coding sublayer lane, second information blocks in w second codewords in the N second codewords are replaced with the first preset sequence.

Further, optionally, a length of the first preset sequence may be less than or equal to a length of the second information block in the second codeword. For example, a code length of the second codeword is 128 bits, the length of the second information block is 120 bits, a length of the second overhead block is eight bits, and the length of the first preset sequence may be 120 bits.

When the second overhead block needs to be discarded on the second optical module side, the second information block is replaced with the first preset sequence, so that the second host performs synchronization based on the first preset sequence, and this helps reduce duration needed for synchronization of the second host.

It should be noted that the replaced w second codewords may be any w second codewords in the N second codewords, and the w second codewords may be w consecutive or inconsecutive second codewords. This is not limited in this application. Intervals between the w inconsecutive second codewords may be the same. Further, a second codeword may be replaced with the first preset sequence every 2×j×5440/PCSL/L bits, where L represents the length of the second information block in the second codeword, PCSL represents a quantity of physical coding sublayer lanes, and a value of j may be a positive integer such as 1, 2, 3, or 4. For example, L=170 bits, and PCSL=16. A second codeword may be replaced with the first preset sequence every 2×1×5440/16/170=4 second codewords. For another example, L=120 bits, and PCSL=16. A second codeword may be replaced with the first preset sequence every 2×3×5440/16/120=17 second codewords. Alternatively, intervals between the w inconsecutive second codewords may be different. This is not limited in this application.

Step 1207: The second optical module sends second indication information and the third data to the second host.

In a possible implementation, the second optical module may send the second indication information to the second host through the indication signal path of the AUI or through the MDIO interface, and may send the third data to the second host through the first data stream path of the AUI.

The second optical module sends, to the second host, the second indication information indicating that the second optical module is in synchronization lock state, to indicate that the third data is valid data.

Step 1208: The second optical module sends the second indication information and the first data to the second host.

For step 1208, refer to the descriptions of the foregoing step 1207. Details are not described herein again.

Through the foregoing step 1201 to step 1208, duration needed for data synchronization may be reduced without increasing bandwidth of a communication system.

FIG. 12b is a schematic flowchart of a method procedure of another data processing method according to this application. The method mainly involves data processing on a second host side. The method includes the following steps.

Step 1211: A second host detects indication information through an AUI or an MDIO interface.

In a possible implementation, if the second host detects second indication information through inst:IS_SIGNAL.indication of an AUI, and receives third data from a first optical module through inst:IS_UNITDATA.indication of the AUI, the second host performs the following step 1212 and step 1213. If the second host detects first indication information through inst:IS_SIGNAL.indication of an AUI, and receives first data from a second optical module through inst:IS_UNITDATA.indication of the AUI, the second host determines that the first data is invalid data.

Step 1212: The second host performs synchronization based on the third data.

In a process in which the second optical module sends the third data to the second host, a part of data in the third data may be lost. Therefore, after receiving the third data, the second host may first perform synchronization based on the third data.

In a possible implementation, synchronization of the second host includes four processes: Process 1: alignment marker (alignment marker, AM) lock (lock). Process 2: lane deskew (lane deskew). Process 3: Determine whether a lane reorder (lane reorder) condition is satisfied. Process 4: lane reorder (lane reorder).

### Process 1: AM lock

For each physical coding sublayer lane (that is, in the lane), where a physical coding sublayer lane D0 is used as an example, if a first host inserts an AM 0 subsequence into second data, and a first preset sequence is also an AM 0 subsequence, the second host may recover a second preset sequence through de-interleaving. If it is detected in the third data that CMs in AMs 0 subsequence match a CM in a known AM 0 subsequence of the second host at least two consecutive times, the second host determines that the AM lock is implemented on the physical coding sublayer lane D0. It may be understood that, if 16 physical coding sublayer lanes are included, the process 1 needs to be performed on each physical coding sublayer lane until the AM lock is implemented on all the 16 physical coding sublayer lanes, which indicates that the second host implements the AM lock. It should be noted that the known AM 0 subsequence of the second host may be pre-stored. This is not limited in this application.

If a first host inserts an AM 0 subsequence into second data, and a first preset sequence is not an AM 0 subsequence, the second host detects in the third data at least once that a first preset sequence matches a first known preset sequence of the second host, and the second host detects, at least once, that a CM in the AM 0 subsequence matches a CM in a known AM 0 subsequence of the second host, and determines that the AM lock is implemented on the physical coding sublayer lane D0. It may be understood that both the first known preset sequence of the second host and the known AM 0 subsequence of the second host may be pre-stored. This is not limited in this application.

Because an interval between the first preset sequence and the AM subsequence is less than that between two consecutive AM subsequences, the second host matches the first preset sequence and the AM subsequence, to help shorten AM lock time, and help accelerate a synchronization process of the second host.

### Process 2: deskew

Deskew is a process of determining delay between physical coding sublayer lanes caused by a distance difference between transmission and eliminating a relative delay. Three aligned bits on the second optical module are used as an example. If time of arrival over the physical coding sublayer lane D0 is t1, time of arrival over a physical coding sublayer lane D1 is t2, time of arrival over a physical coding sublayer lane D2 is t3, t1 is earlier than t2, and t2 is earlier than t3, t1, t2, and t3 may be unified as t3.

### Process 3: Determine whether the lane reorder (Re-order) condition is satisfied.

For example, 16 physical coding sublayer lanes are included. A quantity of AM subsequences on the 16 physical coding sublayer lanes (that is, among the lanes) is detected. Specifically, among the 16 physical coding sublayer lanes, one AM 0 subsequence is detected for the physical coding sublayer lane D0, one AM 1 subsequence is detected for the physical coding sublayer lane D1, and so on, which indicates that the lane reorder condition is satisfied. If it is detected that a quantity of AM subsequences corresponding to any one of the physical coding sublayer lanes is greater than or equal to 2, it indicates that the lane reorder condition is not satisfied. In this case, it is necessary to wait until next time the AM subsequence and a UM sequence in a pre-stored AM subsequence match, which indicates that the lane reorder condition is satisfied.

### Process 4: Physical coding sublayer lane reorder (Reorder)

Because the second host cannot determine a sequence of sequence numbers of the physical coding sublayer lanes, the UM in the AM subsequence needs to be relied on. Each UM one-to-one corresponds to a sequence number of a physical coding sublayer lane. For example, a UM 0 corresponds to the physical coding sublayer lane D0, a UM 1 corresponds to a physical coding sublayer lane D1, and so on. Each UM in the AM subsequence is determined, and the UM is mapped to a sequence number of a corresponding physical coding sublayer lane, so that the physical coding sublayer lanes can be reordered.

Based on the foregoing four processes, the second host performs synchronization until synchronization lock.

Step 1213: The second host determines synchronization lock, and processes the third data.

In a possible implementation, the second host may perform de-interleaving, decoding, and other processing on the third data, to recover data sent by the first host.

It should be noted that, if the second host cannot implement synchronization lock, that is, the second host determines out-of-synchronization lock, the second host may send third indication information to the second optical module, where the third indication information indicates that the second host is in out-of-synchronization lock state. Further, optionally, the second host sends the third indication information to the second optical module through the MDIO interface.

Through the foregoing step 1211 to step 1213, data synchronization on the second host side can be implemented through a small change (adding the lane reorder condition) on the second host side. In addition, a synchronization process may be started as soon as possible by detecting the indication information sent by the second optical module, to help reduce duration needed for synchronization.

Based on the foregoing method 1, time needed for synchronization lock of the second optical module may be referred to as a wait delay *T*₁, and time needed for synchronization lock of the second host may be referred to as a wait delay *T*₂. The second host involves m physical coding sublayer lanes, time needed for mutual deskew between the m physical coding sublayer lanes may be referred to as a wait delay *T*₃. Therefore, a wait delay needed for synchronization of a communication system is *T_{sync} = T₁* + *T₂* + *T₃.*

Method 2: The first optical module obtains the first data based on the foregoing manner b.

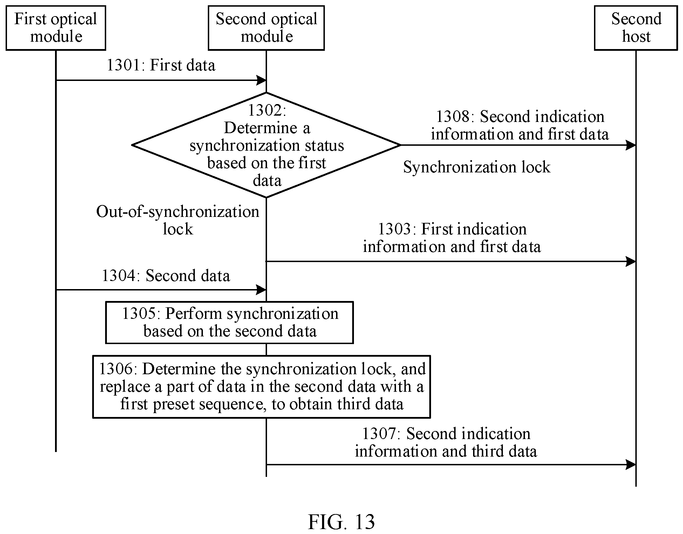

FIG. 13 is a schematic flowchart of a method procedure of still another data processing method according to this application. The method mainly involves data processing on a second optical module side. The method includes the following steps.

Step 1301: A first optical module sends first data to a second optical module. Accordingly, the second optical module receives the first data from the first optical module.

In this example, the first optical module obtains the first data in the foregoing manner b. For step 1301, refer to the descriptions of the foregoing step 501. Details are not described herein again.

Step 1302: The second optical module determines a synchronization status based on the first data.

For step 1302, refer to the descriptions of the foregoing step 1202. Details are not described herein again.

If out-of-synchronization lock is determined, the following step 1303 to step 1307 are performed; or if it is determined that the second optical module is in synchronization lock state, the following step 1308 is performed.

Step 1303: The second optical module sends first indication information and the first data to a second host.

For step 1303, refer to the descriptions of the foregoing step 1203. Details are not described herein again.

Step 1304: The first optical module sends second data to the second optical module. Accordingly, the second optical module receives the second data from the first optical module.

In this example, the first optical module obtains the second data in the foregoing manner b, and the second data includes a second preset sequence.

For step 1304, refer to the descriptions of the foregoing step 1204. Details are not described herein again.

Step 1305: The second optical module performs synchronization based on the second data.

In a possible implementation, a process of step 1305 may be the same as that of the foregoing step 1205. For details, refer to the descriptions of the foregoing step 1205. The synchronization process may be referred to as a synchronization mechanism 1.

In another possible implementation, based on the foregoing manner b, the second preset sequence inserted by a first host into the second data is not scattered, and the second optical module may perform synchronization based on the second preset sequence included in the second data. For example, the second preset sequence is an AM subsequence. If the second optical module detects in the second data that CMs in AM subsequences match a CM in a known AM subsequence of the second optical module at least two consecutive times, synchronization lock is determined. The synchronization process may be referred to as a synchronization mechanism 2.

It should be noted that, the second optical module may alternatively simultaneously start the synchronization mechanism 1 and the synchronization mechanism 2, to perform synchronization in collaboration with each other.

Step 1306: The second optical module determines that the second optical module is in synchronization lock state, and replaces a part of data in the second data with a first preset sequence, to obtain third data.

In a possible implementation, the second data further includes N second codewords, and the second codeword includes a second information block and a second overhead block.

The following shows three possible manners of obtaining the third data as examples.

Manner D: Replace a complete second codeword with the first preset sequence.

In a possible implementation, on each physical coding sublayer lane, replacement with the first preset sequence starts from a boundary of any second codeword in the N second codewords, and the replacement is stopped when it is detected that the second preset sequence matches a second known preset sequence of the second optical module at least once. A physical coding sublayer lane D0 is used as an example. For example, the second preset sequence is an AM 0 subsequence. The replacement with the first preset sequence starts from the boundary of the any second codeword in the N second codewords, and the replacement is stopped when it is detected that the AM 0 subsequence matches a known AM 0 subsequence of the second optical module at least once. In this way, this helps reduce a quantity of replaced second codewords.

It should be noted that, that the second optical module starts to replace the second codeword with the first preset sequence and that the second optical module detects the second preset sequence may be performed synchronously. If the second preset sequence is first detected at least once, the w/2 second codewords may be replaced with the first preset sequence.

In the manner D, for a length of the first preset sequence, refer to the descriptions in the foregoing manner A. Details are not described herein again.

Manner E: Replace the second overhead block in the second codeword with the first preset sequence.

In a possible implementation, on each physical coding sublayer lane, replacement with the first preset sequence starts from a boundary of the second overhead block in any second codeword in the N second codewords, and the replacement is stopped when it is detected that the second preset sequence matches a second known preset sequence of the second optical module at least once.

In the manner E, for a length of the first preset sequence, refer to the descriptions in the foregoing manner B. Details are not described herein again.

Manner F: Replace the second information block in the second codeword with the first preset sequence.

In a possible implementation, on each physical coding sublayer lane, replacement with the first preset sequence starts from a boundary of the second information block in any second codeword in the N second codewords, and the replacement is stopped when it is detected that the second preset sequence matches a second known preset sequence of the second optical module at least once.

In the manner F, for a length of the first preset sequence, refer to the descriptions in the foregoing manner C. Details are not described herein again.

Step 1307: The second optical module sends second indication information and the third data to the second host.

For step 1307, refer to the descriptions of the foregoing step 1207. Details are not described herein again.

Step 1308: The second optical module sends the second indication information and the first data to the second host.

For step 1308, refer to the descriptions of the foregoing step 1208.

Through the foregoing step 1301 to step 1308, whether synchronization is performed may be determined without decoding the second data. An implementation process is simple, and this may help further reduce synchronization duration of a communication system.

In a possible implementation, for a data processing method that is on a second host side and that is based on the foregoing method 2, refer to the descriptions in FIG. 12b. Details are not described herein again.

### Embodiment 2

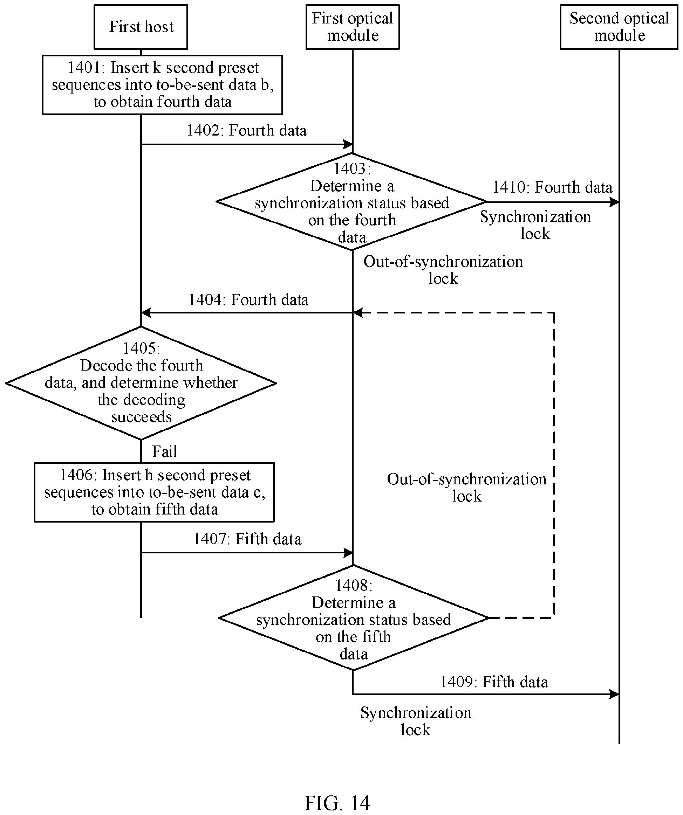

FIG. 14 is a schematic flowchart of a method procedure of another data processing method according to this application. The method includes the following steps.

Step 1401: A first host inserts k second preset sequences into to-be-sent data b, to obtain fourth data.

It may alternatively be understood as that the fourth data includes the k second preset sequences, where k is an integer greater than 1.

Step 1402: The first host sends the fourth data to a first optical module. Accordingly, the first optical module receives the fourth data from the first host.

In a possible implementation, the first host may send the fourth data to the first optical module through a second data stream path of an AUI; or the first host may send the fourth data to the first optical module through an MDIO interface.

Step 1403: The first optical module determines a synchronization status based on the fourth data.

If out-of-synchronization lock is determined, the following step 1404 to step 1409 are performed; or if synchronization lock is determined, the following step 1410 is performed.

Step 1404: The first optical module sends the fourth data to the first host. Accordingly, the first host receives the fourth data from the first optical module.

In a possible implementation, the first optical module may send the fourth data to the first host through a first data stream path of the AUI; or the first optical module may send the fourth data to the first host through the MDIO interface.

The first host receives the fourth data from the first optical module, may determine that the first optical module is in out-of-synchronization lock state, and enters a loopback mode (loopback mode).

Step 1405: The first host decodes the fourth data, and determines whether the decoding succeeds.

If decoding performed by the first host on the fourth data does not fail three consecutive times, the first host sends, to the first optical module through the MDIO interface, the fourth data and information indicating that the decoding does not fail three consecutive times. Further, after a plurality times of attempts, the first host automatically enters a warning state. If decoding performed by the first host on the fourth data fails three consecutive times, the following step 1406 may be performed, indicating that the first optical module is faulty in a process of performing synchronization based on the fourth data.

Step 1406: The first host inserts h second preset sequences into to-be-sent data c, to obtain fifth data.

The fifth data includes the h second preset sequences, and h is greater than k.

It may alternatively be understood as that the first host may insert, into the to-be-sent data c, second preset sequences that are denser than those inserted into the data b. For example, the first host inserts one second preset sequence into the data b every 8192×5440/16 bits, and may insert one second preset sequence into the data c every 8192×5440/16/2 bits. The data c and the data b belong to two parts of data in a same data stream.

Step 1407: The first host sends the fifth data to the first optical module. Accordingly, the first optical module receives the fifth data from the first host.

In a possible implementation, the first host may send the fifth data to the first optical module through the MDIO interface, or the first host may send the fifth data to the first optical module through the second data stream path.

Step 1408: The first optical module determines a synchronization status based on the fifth data.

For step 1408, refer to the descriptions of the foregoing step 1403. Specifically, the "fourth data" in step 1403 may be replaced with the "fifth data". Details are not described herein again.

It should be noted that, if the first optical module determines out-of-synchronization lock based on the fifth data, steps similar to the foregoing step 1403 to step 1406 may be cyclically performed. Specifically, the "fourth data" may be replaced with the "fifth data". The first host inserts, into data that is after the to-be-sent data c, second preset sequences denser than those in the foregoing step 1406, to obtain new data, and sends the new data to the first optical module.

Step 1409: The first optical module determines synchronization lock, and sends the fifth data to a second optical module. Accordingly, the second optical module receives the fifth data from a first optical module.

Step 1410: The first optical module sends the fourth data to the second optical module. Accordingly, the second optical module receives the fourth data from the first optical module.

Through the foregoing step 1401 to step 1410, the first host receives the fourth data from the first optical module, may determine that the first optical module is in out-of-synchronization lock state, and enters the loopback mode (loopback mode). This helps avoid a case in which the second optical module cannot accurately identify received data because the first optical module transmits out-of-synchronization lock data to the second optical module. In addition, this helps avoid a case in which the first optical module exceeds a limit of an allocated processing delay. Further, the first host obtains the fifth data by inserting the second preset sequences more densely, for the first optical module to quickly implement synchronization lock.

In a possible implementation, for a step after step 1410, refer to the descriptions of the method 1 or the method 2. Specifically, the "first data" in the method 1 or the method 2 may be replaced with the "fifth data". Details are not described herein again.

It should be noted that when a second host and the second optical module are used as transmitting ends to send data, the method shown in FIG. 14 is also applicable to the second host and the second optical module. Specifically, the "first optical module" may be replaced with the "second optical module", and the "first host" may be replaced with the "second host".

In a possible implementation, Embodiment 2 may alternatively be combined with Manner b in Embodiment 1, and specifically, the "data A" in the manner b may be replaced with the "fourth data".

### Embodiment 3

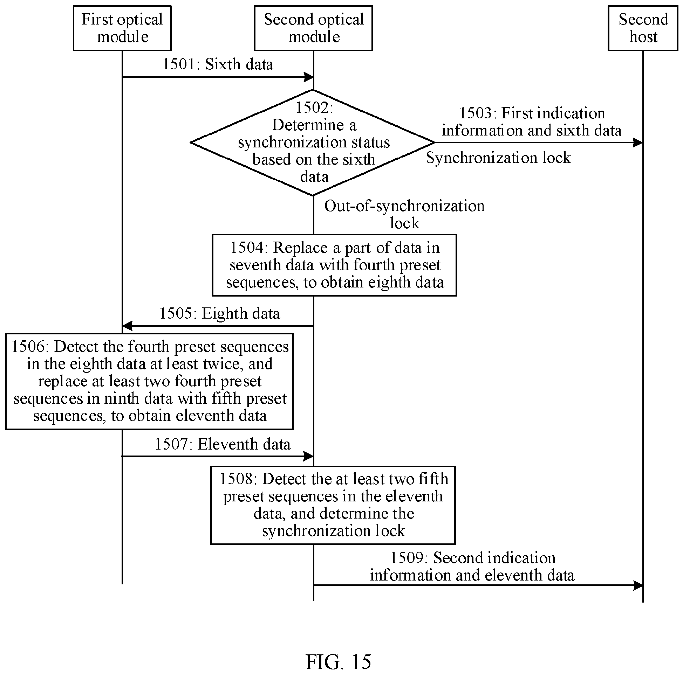

FIG. 15 is a schematic flowchart of a method procedure of another data processing method according to this application. In the method, a first optical module communicates with a second optical module in a full-duplex mode. In other words, the first optical module may also receive data when sending data, and the second optical module may also receive the data when sending the data. The method includes the following steps.

Step 1501: The first optical module sends sixth data to the second optical module. Accordingly, the second optical module receives the sixth data from the first optical module.

The sixth data includes a plurality of fourth codewords.

Step 1502: The second optical module determines a synchronization status based on the sixth data.

For step 1502, refer to the descriptions of the foregoing step 502. Details are not described herein again.

If out-of-synchronization lock is determined, the following step 1503 to step 1509 are performed; or if it is determined that the second optical module is in synchronization lock state, the following step 1510 is performed. It may be understood that, after determining out-of-synchronization lock, the second optical module determines that the received sixth data is invalid data.

Step 1503: The second optical module sends first indication information and the sixth data to a second host.

The second optical module sends the first indication information to the second host through an indication signal path inst:IS_SIGNAL.indication of an AUI or an MDIO interface, and sends the sixth data to the second host through a first data stream path inst:IS_UNITDATA.indication of the AUI or the MDIO interface.

Step 1504: The second optical module replaces a part of data in seventh data with fourth preset sequences, to obtain eighth data.

In a possible implementation, the seventh data is sent by the second host to the second optical module, and may be data obtained by processing (for example, encoding or interleaving) to-be-sent data d by the second host.

The fourth preset sequence indicates that the second optical module is not in synchronization lock state.

In a possible implementation, the seventh data may include P third codewords, the third codeword includes a third information block and a third overhead block, and P is an integer greater than 1.

The following shows three possible manners of obtaining the eighth data as examples.

Manner 1: Replace complete third codewords with the fourth preset sequences.

In a possible implementation, on each physical coding sublayer lane, z third codewords in the P third codewords are replaced with the fourth preset sequences, to obtain the eighth data, where z is a positive integer greater than 1 and less than or equal to P.

Further, optionally, a length of the fourth preset sequence may be equal to a positive integer multiple of a code length of one third codeword. For example, the code length of the third codeword is 128 bits, and the length of the fourth preset sequence is also 128 bits.

The complete third codewords are replaced with the fourth preset sequences, so that the first optical module can quickly determine a boundary of each third codeword in the received eighth data. In this way, duration needed for synchronization can be reduced, and complexity of synchronization computation on a first optical module side can be reduced.

Manner 2: Replace the third overhead block in the third codeword with the fourth preset sequences.

In a possible implementation, on each physical coding sublayer lane, third overhead blocks in z third codewords in the P third codewords are replaced with the fourth preset sequences.

Further, optionally, a length of the fourth preset sequence may be less than or equal to a length of the third overhead block in the third codeword. For example, a code length of the third codeword is 128 bits, a length of the third information block is 120 bits, the length of the third overhead block is eight bits, and the length of the fourth preset sequence may be eight bits.

The third overhead block in the third second codeword is replaced with the fourth preset sequences, so that normal transmission of valid data cannot be affected. Further, when the length of the fourth preset sequence is equal to the length of the third overhead block, the first optical module can quickly determine a boundary of the third codeword in the received eighth data, to reduce duration needed for synchronization.

Manner 3: Replace the third information block in the third codeword with the fourth preset sequences.

In a possible implementation, on each physical coding sublayer lane, third information blocks in z third codewords in the P third codewords are replaced with the fourth preset sequences.

Further, optionally, a length of the fourth preset sequence may be less than or equal to a length of the third information block in the third codeword. For example, a code length of the third codeword is 128 bits, the length of the third information block is 120 bits, a length of the third overhead block is eight bits, and the length of the fourth preset sequence may be 120 bits.

When a second overhead block needs to be discarded on a second optical module side, the third information block is replaced with the fourth preset sequences, so that the first optical module performs synchronization based on the fourth preset sequences, and this helps reduce duration needed for synchronization of the first optical module.

It should be noted that the z replaced third codewords may be any z third codewords in the P third codewords, and the z third codewords may be z consecutive or inconsecutive third codewords. This is not limited in this application. Intervals between the z inconsecutive third codewords may be the same. Further, one third codeword may be replaced with a fourth preset sequence every 2×j×5440/PCSL/L bits, where L represents the length of the third information block in the third codeword, PCSL represents a quantity of physical coding sublayer lanes, and a value of j may be a positive integer such as 1, 2, 3, or 4. For example, L=170 bits, and PCSL=16. One third codeword may be replaced with the fourth preset sequence every 2×1×5440/16/170=4 third codewords. For another example, L=120 bits, and PCSL=16. One third codeword may be replaced with the fourth preset sequence every 2×3×5440/16/120=17 third codewords. Alternatively, intervals between the z inconsecutive third codewords may be different. This is not limited in this application.

Step 1505: The second optical module sends the eighth data to the first optical module. Accordingly, the first optical module receives the eighth data from the second optical module.

In a possible implementation, the second optical module may send the eighth data through a transmission medium connected to the first optical module.

Ninth data is obtained by replacing a part of data in tenth data with the fourth preset sequences by the first optical module. A specific process is similar to the foregoing step 1504, and specifically, the "seventh data" in step 1504 may be replaced with the "tenth data".

Step 1506: The first optical module detects the fourth preset sequences in the eighth data at least twice, and replaces the at least two fourth preset sequences in the ninth data with fifth preset sequences, to obtain eleventh data.

The fifth preset sequence is different from the fourth preset sequence. For example, the fourth preset sequence may be an S1 sequence, and the fifth preset sequence may be an S2 sequence. Further, optionally, the length of the fourth preset sequence may be the same as a length of the fifth preset sequence. Further, the lengths of the fourth preset sequence and the fifth preset sequence may be equal to the length of the third codeword.

Step 1507: The first optical module sends the eleventh data to the second optical module. Accordingly, the second optical module receives the eleventh data from the first optical module.

Step 1508: The second optical module detects the at least two fifth preset sequences in the eleventh data, and determines synchronization lock.

It should be noted that the second optical module directly detects the fifth preset sequences without decoding the eleventh data.

Step 1509: The second optical module sends second indication information and the eleventh data to the second host.

Through the foregoing step 1501 to step 1509, synchronization of the second optical module may be independent of a processing procedure of the second host. Therefore, an existing synchronization procedure of the second host does not need to be changed.

In a possible implementation, for a data processing method on a second host side, refer to the descriptions in FIG. 12b. Details are not described herein again.

Further, optionally, the second host may send fifth indication information to the second optical module, where the fifth indication information indicates a synchronization status of the second host, and the synchronization status may include synchronization lock or out-of-synchronization lock. In other words, the second optical module may determine a synchronization status of data from the first optical module, and may also determine a synchronization status of data from the second host. For example, the second host may send the fifth indication information to the second optical module through the MDIO interface.

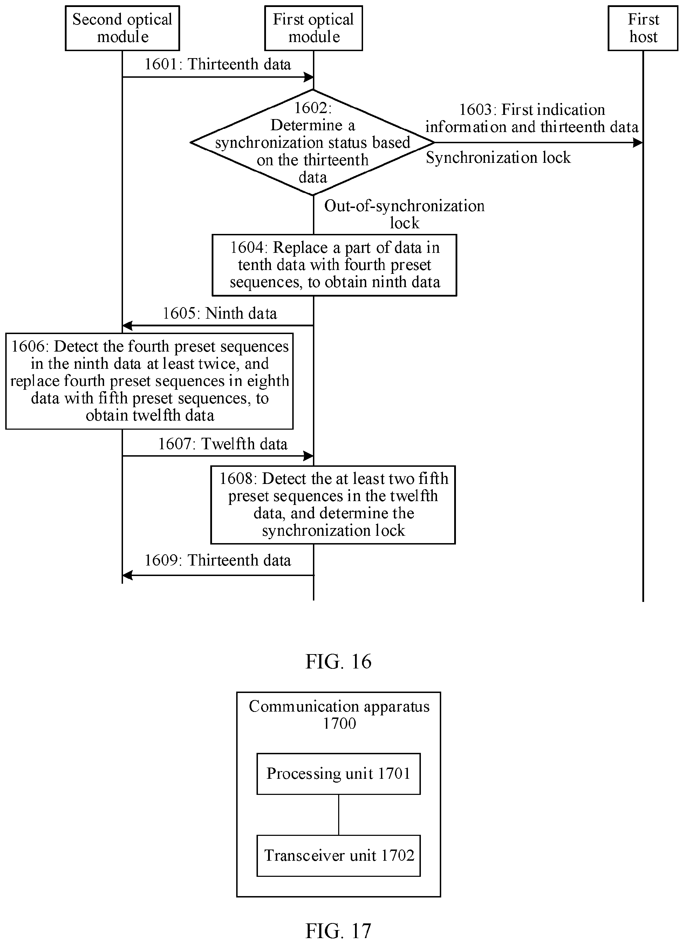

FIG. 16 is a schematic flowchart of a method procedure of still another data processing method according to this application. The method includes the following steps.

Step 1601: A second optical module sends thirteenth data to a first optical module. Accordingly, the first optical module receives the thirteenth data from the second optical module.

Step 1602: The first optical module determines a synchronization status based on the thirteenth data.

For step 1602, refer to the descriptions of the foregoing step 502. Details are not described herein again.

If out-of-synchronization lock is determined, the following step 1603 to step 1609 are performed; or if it is determined that the first optical module is in synchronization lock state, the following step 1510 is performed.

Step 1603: The first optical module sends first indication information and the thirteenth data to a first host.

Step 1604: The first optical module replaces a part of data in tenth data with fourth preset sequences, to obtain ninth data.

For step 1604, refer to the descriptions of the foregoing step 1504. Details are not described herein again.

Step 1605: The first optical module sends the ninth data to the second optical module. Accordingly, the second optical module receives the ninth data from the first optical module.

Step 1606: The second optical module detects the fourth preset sequences in the ninth data at least twice, and replaces fourth preset sequences in eighth data with fifth preset sequences, to obtain twelfth data.

Step 1607: The second optical module sends the twelfth data to the first optical module. Accordingly, the first optical module receives the twelfth data from the second optical module.

Step 1608: The first optical module detects the at least two fifth preset sequences in the twelfth data, and determines synchronization lock.

Step 1609: The first optical module sends thirteenth data to the second optical module. Accordingly, the second optical module receives the thirteenth data from the first optical module.

The thirteenth data is normal data obtained by processing to-be-sent data e by the first host, and the normal data includes no fourth preset sequence and no fifth preset sequence. It may alternatively be understood as that the first optical module and the second optical module exchange the normal data.

Through the foregoing step 1601 to step 1609, synchronization of the first optical module may be independent of a processing procedure of the first host. Therefore, an existing synchronization procedure of the first host does not need to be changed.

Synchronization lock of the second optical module may be implemented through FIG. 15, and synchronization lock of the first optical module may be implemented through FIG. 16. A combination of the method shown in FIG. 15 and the method shown in FIG. 16 may further reduce time needed for synchronization.

It should be noted that, in this application, steps (or processes) performed by the first optical module may alternatively be performed by a first PMA sublayer or the first PMA sublayer and a first FEC sublayer. For ease of description of the solution, the first PMA sublayer or the first PMA sublayer and the first FEC sublayer may be referred to as a first layer. Steps (or processes) performed by the second optical module may be performed by a second PMA sublayer or the second PMA sublayer and a second FEC sublayer. For ease of description of the solution, the second PMA sublayer or the second PMA sublayer and the second FEC sublayer may be referred to as a second layer. Steps (or processes) performed by the first host may be performed by a first PCS or the first PCS and a first FEC sublayer. For ease of description of the solution, the first PCS or the first PCS and the first FEC sublayer may be referred to as a third layer. Steps (or processes) performed by the second host may be performed by a second PCS or the second PCS and a second FEC sublayer. For ease of description of the solution, the second PCS or the second PCS and the second FEC sublayer may be referred to as a fourth layer. In other words, in the foregoing descriptions of in this application, the first optical module may be used instead of the first layer, the second optical module may be used instead of the second layer, the first host may be used instead of the third layer, and the second host may be used instead of the fourth layer. A specific execution process is not described herein again.

It may be understood that, to implement the functions in the foregoing embodiments, the first optical module, the second optical module, the first host, and the second host include corresponding hardware structures and/or software modules for performing the functions. A person skilled in the art should be easily aware that, with reference to the modules and the method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

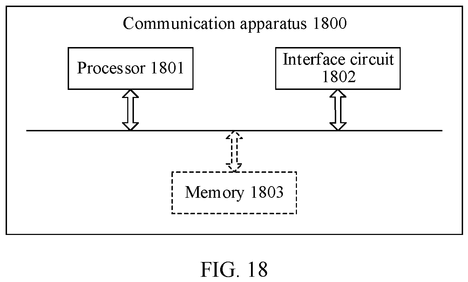

Based on the foregoing content and a same concept, FIG. 17 and FIG. 18 are diagrams of structures of possible communication apparatuses according to this application. These communication apparatuses may be configured to implement the functions of the first optical module, the second optical module, the first host, or the second host in the foregoing method embodiments, and therefore can also implement the beneficial effects of the foregoing method embodiments. In this application, the communication apparatus may be the first communication apparatus 1011, the third communication apparatus 1012, the second communication apparatus 1021, or the fourth communication apparatus 1022 shown in FIG. 1, or may be a module (for example, a chip) used in the first communication apparatus 1011, the third communication apparatus 1012, the second communication apparatus 1021, or the fourth communication apparatus 1022.

As shown in FIG. 17, the communication apparatus 1700 includes a processing unit 1701 and a transceiver unit 1702. The communication apparatus 1700 is configured to implement the functions of the first optical module, the second optical module, the first host, or the second host in the method embodiment shown in FIG. 5, FIG. 6a, FIG. 6b, FIG. 9, FIG. 10, FIG. 12a, FIG. 12b, FIG. 13, FIG. 14, FIG. 15, or FIG. 16.

When the communication apparatus 1700 is configured to implement the functions of the second optical module in the method embodiment shown in FIG. 5, the transceiver unit 1702 is configured to receive first data from a first optical module; the processing unit 1701 is configured to determine out-of-synchronization lock based on the first data; the transceiver unit 1702 is further configured to send first indication information to a second host, where the first indication information indicates that the second optical module is in out-of-synchronization lock state; and receive second data from the first optical module; and the processing unit 1701 is further configured to determine synchronization lock based on the second data, and send second indication information to the second host via the transceiver unit, where the second indication information indicates that the second optical module is in synchronization lock state.

When the communication apparatus 1700 is configured to implement the functions of the second host in the method embodiment shown in FIG. 5, the transceiver unit 1702 is configured to receive first indication information from a second optical module, where the first indication information indicates that the second optical module is in out-of-synchronization lock state; the processing unit 1701 is configured to determine out-of-synchronization lock based on the first indication information; the transceiver unit 1702 is further configured to receive second indication information from the second optical module, where the second indication information indicates that the second optical module is in synchronization lock state; and the processing unit 1701 is further configured to start synchronization based on the second indication information.

For more detailed descriptions of the processing unit 1701 and the transceiver unit 1702, directly refer to the related descriptions in the method embodiment shown in FIG. 5. Details are not described one by one herein again.

It should be understood that the processing unit 1701 in this embodiment of this application may be implemented by a processor or a processor-related circuit component, and the transceiver unit 1702 may be implemented by an interface circuit or an interface circuit-related circuit component.

Based on the foregoing content and a same concept, as shown in FIG. 18, this application further provides a communication apparatus 1800. The communication apparatus 1800 may include a processor 1801 and an interface circuit 1802. The processor 1801 and the interface circuit 1802 are coupled to each other. It may be understood that the interface circuit 1802 may be an interface circuit or an input/output interface. Optionally, the communication apparatus 1800 may further include a memory 1803, configured to store instructions executed by the processor 1801, input data needed by the processor 1801 to run the instructions, or data generated after the processor 1801 runs the instructions.

When the communication apparatus 1800 is configured to implement the method shown in FIG. 5, the processor 1801 is configured to perform the functions of the processing unit 1701, and the interface circuit 1802 is configured to perform the functions of the transceiver unit 1702.

Based on the foregoing content and a same concept, this application further provides a communication system. The communication system may include the second optical module and the second host, and further, the apparatus may include the first optical module and the first host. For possible implementations of the second optical module, the second host, and the first optical module, refer to the foregoing descriptions. Details are not described herein again.

It may be understood that, the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The genera-purpose processor may be a microprocessor or any regular processor.

The method steps in embodiments of this application may be implemented in a hardware manner, or may be implemented in a manner of executing software instructions by the processor. The software instructions may consist of a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium, and can write information to the storage medium. Certainly, the storage medium may be a component of the processor. The processor and the storage medium may be located in an ASIC. In addition, the ASIC may be located in a network device or a terminal device. Certainly, the processor and the storage medium may alternatively exist in the communication apparatus as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device such as a server or a data center integrating one or more usable media. Alternatively, the usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD).

In embodiments of this application, unless otherwise stated or there is a logic conflict, terms and/or descriptions between different embodiments are consistent and may be mutually referenced, and technical features in the different embodiments may be combined based on an internal logical relationship thereof, to form a new embodiment.

In this application, "at least one" means one or more, and "a plurality of" means two or more. "At least one of the following" or a similar expression thereof indicates any combination of these items, including a single item or any combination of a plurality of items. For example, at least one of a, b or c may indicate a, b c, "a and b", "a and c", "b and c", or "a, b, and c", where a, b, and c may be singular or plural. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. In addition, the word "example" in this application is for representing giving an example, an illustration, or a description. Any embodiment or design scheme described as an "example" in this application should not be explained as being more preferred or having more advantages than another embodiment or design scheme. Alternatively, it may be understood as that the word "example" is used to present a concept in a specific manner, and does not constitute a limitation on this application.

It may be understood that numbers in embodiments of this application are for differentiation merely for ease of description, but are not used to limit the scope of embodiments of this application. Sequence numbers of the foregoing processes do not mean an execution sequence, and the execution sequence of the processes should be determined based on functions and internal logic of the processes. The terms "first", "second", and the like are for distinguishing between similar objects, but do not necessarily indicate a specific order or sequence. In addition, the terms "include", "have", and any variant thereof are intended to cover non-exclusive inclusion, for example, include a series of steps or modules. Methods, systems, products, or devices are not necessarily limited to those steps or modules that are expressly listed, but may include other steps or modules that are not expressly listed or that are inherent to such processes, methods, products, or devices.

It is clear that a person skilled in the art can make various modifications and variations to this application without departing from the scope of this application. This application is intended to cover these modifications and variations of this application provided that they fall within the scope of the claims of this application and their equivalent technologies.

## Claims

1. A data processing method, comprising:
receiving, by a second communication apparatus, first data from a first communication apparatus;
determining, by the second communication apparatus, out-of-synchronization lock based on the first data;
sending, by the second communication apparatus, first indication information to a fourth communication apparatus, wherein the first indication information indicates that the second communication apparatus is in out-of-synchronization lock;
receiving, by the second communication apparatus, second data from the first communication apparatus; and
determining, by the second communication apparatus, synchronization lock based on the second data, and sending second indication information to the fourth communication apparatus, wherein the second indication information indicates that the second communication apparatus is in synchronization lock state.

2. The method according to claim 1, wherein the method further comprises:
sending, by the second communication apparatus, third data to the fourth communication apparatus, wherein the third data is obtained by replacing a part of data in the second data with a first preset sequence, and the first preset sequence is for synchronization of the fourth communication apparatus.

3. The method according to claim 2, wherein the second data comprises N second codewords, and N is an integer greater than 1; and
the method further comprises:
replacing, by the second communication apparatus, w second codewords in the N second codewords with the first preset sequence, to obtain the third data, wherein w is a positive integer less than or equal to N.

4. The method according to claim 3, wherein a length of the first preset sequence is equal to a positive integer multiple of a code length of one second codeword.

5. The method according to claim 2, wherein the second data comprises N second codewords, the second codeword comprises a second information block and a second overhead block, and N is an integer greater than 1; and
the method further comprises:
replacing, by the second communication apparatus, first information blocks in w second codewords in the N second codewords with the first preset sequence, to obtain the third data.

6. The method according to claim 5, wherein a length of the first preset sequence is less than or equal to a length of one second information block.

7. The method according to claim 2, wherein the second data comprises N second codewords, the second codeword comprises a second information block and a second overhead block, and N is an integer greater than 1; and
the method further comprises:
replacing, by the second communication apparatus, second overhead blocks in w second codewords in the N second codewords with the first preset sequence, to obtain the third data.

8. The method according to claim 7, wherein a length of the first preset sequence is less than or equal to a length of one second overhead block.

9. The method according to any one of claims 3 to 8, wherein the w second codewords are w consecutive or inconsecutive second codewords in the N second codewords.

10. The method according to claim 2, wherein the second data comprises a second preset sequence; and
the method further comprises:
replacing, by the second communication apparatus, a second codeword with the first preset sequence from a boundary position of any second codeword in N second codewords, and stopping the replacement when it is detected that the second preset sequence matches a second known preset sequence of the second communication apparatus at least once, to obtain the third data.

11. The method according to claim 10, wherein the second preset sequence is at least one subsequence in an alignment marker AM group.

12. The method according to any one of claims 1 to 11, wherein the second data comprises the N second codewords, and N is an integer greater than 1; and
the determining, by the second communication apparatus, synchronization lock based on the second data comprises:
decoding, by the second communication apparatus, the second data based on a sliding window with a preset quantity of bits, wherein the preset quantity of bits is less than the code length of the second codeword;
after determining that the decoding succeeds at least once, performing, by the second communication apparatus, decoding based on a sliding window with the code length of the second codeword, and collecting statistics on a quantity of decoding successes in second decoding results; and
if the second communication apparatus determines that the quantity of decoding successes in the second decoding results is greater than a third threshold, determining, by the second communication apparatus, synchronization lock.

13. The method according to any one of claims 1 to 12, wherein the second data comprises the N second codewords, the second codeword comprises the second information block and the second overhead block, and the second overhead block comprises a third preset sequence; and
the determining, by the second communication apparatus, synchronization lock based on the second data comprises:
if the second communication apparatus detects, within a preset time window, that a quantity of third preset sequences is greater than or equal to a fifth threshold, determining, by the second communication apparatus, synchronization lock.

14. The method according to any one of claims 2 to 13, wherein the first preset sequence is at least one subsequence in the alignment marker AM group.

15. The method according to any one of claims 1 to 14, wherein the determining, by the second communication apparatus, out-of-synchronization lock based on the first data comprises:
decoding, by the second communication apparatus, the first data, to obtain M first decoding results, wherein the first decoding result comprises a decoding success or a decoding failure, and M is an integer greater than 1; and
if a quantity of decoding failures in the M first decoding results is greater than a first threshold, determining out-of-synchronization lock.

16. The method according to any one of claims 1 to 15, wherein the sending, by the second communication apparatus, second indication information to the fourth communication apparatus comprises:
sending, by the second communication apparatus, the second indication information to the fourth communication apparatus through an indication signal path of an attachment unit interface AUI or through a management data input/output MDIO interface.

17. The method according to any one of claims 2 to 16, wherein the sending, by the second communication apparatus, third data to the fourth communication apparatus comprises:
sending, by the second communication apparatus, the third data to the fourth communication apparatus through a first data stream path of the attachment unit interface AUI.

18. The method according to any one of claims 1 to 16, wherein the method further comprises:
sending, by the second communication apparatus, the first data to the fourth communication apparatus through a first data stream path of the attachment unit interface AUI.

19. The method according to any one of claims 1 to 18, wherein the method further comprises:
receiving, by the second communication apparatus, third indication information from the fourth communication apparatus through the management data input/output MDIO interface, wherein the third indication information indicates that the fourth communication apparatus is in out-of-synchronization lock state.

20. The method according to any one of claims 1 to 19, wherein the second communication apparatus comprises a second optical module, the first communication apparatus comprises a first optical module, and the fourth communication apparatus comprises a second host.

21. The method according to claim 20, wherein the second communication apparatus comprises a second physical medium attachment PMA sublayer, or comprises the second PMA sublayer and a second forward error correction FEC sublayer; and the fourth communication apparatus comprises a second physical coding sublayer PCS, or comprises the second PCS and a fourth FEC sublayer.

22. A second communication apparatus, comprising a transceiver unit and a processing unit, wherein
the transceiver unit is configured to receive first data from a first communication apparatus;
the processing unit is configured to determine out-of-synchronization lock based on the first data;
the transceiver unit is further configured to: send first indication information to a fourth communication apparatus, wherein the first indication information indicates that the second communication apparatus is in out-of-synchronization lock state; and receive second data from the first communication apparatus; and
the processing unit is further configured to: determine synchronization lock based on the second data, and send second indication information to the fourth communication apparatus via the transceiver unit, wherein the second indication information indicates that the second communication apparatus is in synchronization lock state.

23. The apparatus according to claim 22, wherein the transceiver unit is further configured to:
send third data to the fourth communication apparatus, wherein the third data is obtained by replacing a part of data in the second data with a first preset sequence, and the first preset sequence is for synchronization of the fourth communication apparatus.

24. The apparatus according to claim 23, wherein the second data comprises N second codewords, and N is an integer greater than 1; and
the processing unit is further configured to:
replace w second codewords in the N second codewords with the first preset sequence, to obtain the third data, wherein w is a positive integer less than or equal to N.

25. The apparatus according to claim 24, wherein a length of the first preset sequence is equal to a positive integer multiple of a code length of one second codeword.

26. The apparatus according to claim 23, wherein the second data comprises N second codewords, the second codeword comprises a second information block and a second overhead block, and N is an integer greater than 1; and
the processing unit is further configured to:
replace first information blocks in w second codewords in the N second codewords with the first preset sequence, to obtain the third data.

27. The apparatus according to claim 26, wherein a length of the first preset sequence is less than or equal to a length of one second information block.

28. The apparatus according to claim 23, wherein the second data comprises N second codewords, the second codeword comprises a second information block and a second overhead block, and N is an integer greater than 1; and
the processing unit is further configured to:
replace second overhead blocks in w second codewords in the N second codewords with the first preset sequence, to obtain the third data.

29. The apparatus according to claim 28, wherein a length of the first preset sequence is less than or equal to a length of one second overhead block.

30. The apparatus according to any one of claims 24 to 29, wherein the w second codewords are w consecutive or inconsecutive second codewords in the N second codewords.

31. The apparatus according to claim 23, wherein the second data comprises a second preset sequence; and
the processing unit is further configured to:
replace a second codeword with the first preset sequence from a boundary position of any second codeword in N second codewords, and stop the replacement when it is detected that the second preset sequence matches a second known preset sequence of the second communication apparatus at least once, to obtain the third data.

32. The apparatus according to claim 31, wherein the second preset sequence is at least one subsequence in an alignment marker AM group.

33. The apparatus according to any one of claims 22 to 32, wherein the second data comprises the N second codewords, and N is an integer greater than 1; and
the processing unit is specifically configured to:
decode the second data based on a sliding window with a preset quantity of bits, wherein the preset quantity of bits is less than the code length of the second codeword;
after it is determined that the decoding succeeds at least once, perform decoding based on a sliding window with the code length of the second codeword, and collect statistics on a quantity of decoding successes in second decoding results; and
if it is determined that the quantity of decoding successes in the second decoding results is greater than a third threshold, determine synchronization lock.

34. The apparatus according to any one of claims 22 to 33, wherein the second data comprises the N second codewords, the second codeword comprises the second information block and the second overhead block, and the second overhead block comprises a third preset sequence; and
the processing unit is specifically configured to:
if it is detected, within a preset time window, that a quantity of third preset sequences is greater than a fifth threshold, determine synchronization lock.

35. The apparatus according to any one of claims 23 to 34, wherein the first preset sequence is at least one subsequence in the alignment marker AM group.

36. The apparatus according to any one of claims 22 to 35, wherein the processing unit is specifically configured to:
decode the first data, to obtain M first decoding results, wherein the first decoding result comprises a decoding success or a decoding failure, and M is an integer greater than 1; and
if a quantity of decoding failures in the M first decoding results is greater than a first threshold, determine out-of-synchronization lock.

37. The apparatus according to any one of claims 22 to 36, wherein the transceiver unit is specifically configured to:
send the second indication information to the fourth communication apparatus through an indication signal path of an attachment unit interface AUI or through a management data input/output MDIO interface.

38. The apparatus according to any one of claims 22 to 37, wherein the transceiver unit is specifically configured to:
send the third data to the fourth communication apparatus through a first data stream path of the attachment unit interface AUI.

39. The apparatus according to any one of claims 22 to 38, wherein the transceiver unit is specifically configured to:
send the first data to the fourth communication apparatus through the first data stream path of the attachment unit interface AUI.

40. The apparatus according to any one of claims 22 to 39, wherein the transceiver unit is further configured to:
receive third indication information from the fourth communication apparatus through the management data input/output MDIO interface.

41. The apparatus according to any one of claims 22 to 40, wherein the second communication apparatus comprises a second optical module, the first communication apparatus comprises a first optical module, and the fourth communication apparatus comprises a second host.

42. The apparatus according to claim 41, wherein the second communication apparatus comprises a second physical medium attachment PMA sublayer, or comprises the second PMA sublayer and a second forward error correction FEC sublayer; and the fourth communication apparatus comprises a second physical coding sublayer PCS, or comprises the second PCS and a fourth FEC sublayer.

43. A second communication apparatus, comprising a processor and an interface circuit, wherein the interface circuit is configured to: receive a signal from an apparatus other than the communication apparatus, and transmit the signal to the processor; or send a signal from the processor to an apparatus other than the communication apparatus; and the processor is configured to implement the method according to any one of claims 1 to 21 through a logic circuit or by executing code instructions.

44. A computer-readable storage medium, wherein the computer-readable storage medium stores a computer program or instructions; and when the computer program or the instructions are executed by a communication apparatus, the communication apparatus is enabled to perform the method according to any one of claims 1 to 21.

45. A computer program product, wherein the computer program product comprises a computer program or instructions; and when the computer program or the instructions are executed by a communication apparatus, the communication apparatus is enabled to perform the method according to any one of claims 1 to 21.
